# EUROPEAN PATENT APPLICATION

(11) **EP 2 806 621 A1**
(43) Date of publication of application: **26.11.2014**
(21) Application number: 14169393.7
(22) Date of filing: 22.05.2014
(51) Int. Cl.: H04M 1/725

(54) **Method of operating notification screen and electronic device supporting the same**

(30) Priority: 22.05.2013 KR 20130057923
(71) Applicant: Samsung Electronics Co., Ltd, Gyeonggi-do 443-742 (KR)
(72) Inventor: Jeon, Yongjoon, 443-742 Gyeonggi-do (KR); Kim, Geonsoo, 443-742 Gyeonggi-do (KR); Seol, Jaewoo, 443-742 Gyeonggi-do (KR)
(74) Representative: Jenkins, Richard Gavin

(57) **Abstract**

The present disclosure relates to a notification function, and provides a function of differently displaying pieces of notification information by applying a plurality of display types.

## Description

### TECHNICAL FIELD

Various embodiments of the present disclosure relate to a notification function of an electronic device.

### BACKGROUND

An electronic device has been in the limelight of industrial and lifestyle fields since it has supported various user functions. Recently, an electronic device integrally supporting various user functions has appeared. Such an electronic device can perform a specific function while outputting information created during the execution of the specific function.

### SUMMARY

To address the above-discussed deficiencies, it is a primary object to provide a method of operating a notification screen and an electronic device supporting the same.

In a first example, a method of operating a function of notification in an electronic device is provided. The method includes receiving a specific input event. The method also includes displaying notification information generated in the electronic device according to a reception of the specific input event as a notification item in any one display type of a plurality of display types.

In a second example, an electronic device configured to support an operation of a notification function is provided. The electronic device includes a storage unit configured to store notification information generated according to an operation of the electronic device. The electronic device also includes a controller configured to generate a notification item corresponding to the notification information by applying a specific display type among a plurality of display types. The electronic device further includes a display unit configured to display the notification item on a notification screen.

In a third example, a computer readable storage medium is provided. The computer readable storage includes a processor configured to process a request for outputting a notification screen.

The computer readable storage medium also includes a processor configured to analyze at least one of a property of notification information generated according to an operation of an electronic device and a user setting for the notification information when an output of the notification screen is requested. The computer readable storage medium further includes a processor configured to select a specific display type among a plurality of display types according to the analysis result; a processor for generating a notification item including at least a part of the notification information based on the selected display type. The computer readable storage medium includes a processor configured to process a display of the notification screen including the notification item.

The methods, electronic devices, and computer readable storage mediums disclosed herein can be used to improve the notification screen for information provided in an electronic device.

Further, the methods, electronic devices, and computer readable storage mediums disclosed herein can be used to provide a convenient user interface.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is an example block diagram illustrating a configuration of an electronic device supporting an operation of a notification function according to this disclosure;
FIG. 2 is an example block diagram particularly illustrating a configuration of a controller according to this disclosure;
FIG. 3 is an example flowchart illustrating a process of controlling an electronic device for displaying a notification screen according to this disclosure;
FIG. 4 is an example flowchart illustrating a process of controlling an electronic device for operating a notification item according to this disclosure;
FIG. 5 is an example flowchart illustrating a process of controlling an electronic device for displaying a notification screen according to this disclosure;
FIG. 6 is an example of a grid type alarm screen provided by the electronic device according to this disclosure;
FIG. 7 is an example of a mixed type alarm screen provided by the electronic device, in which the grid type alarm screen and a list type alarm screen are mixed according to this disclosure;
FIG. 8 is an example of a mixed type alarm screen provided by the electronic device, in which the grid type alarm screen and a list type alarm screen are mixed according to this disclosure;
FIG. 9 is an example of an arrangement of items in a remaining space of an alarm area provided by the electronic device according to this disclosure;
FIGS. 10A-10C are examples of alarm screens provided in a pop-up form by the electronic device according to this disclosure;
FIGS. 11A and 11B are examples of a process of changing an alarm item display scheme provided by the electronic device according to this disclosure;
FIGS. 12A-12C are examples of a process of changing an alarm item display scheme provided by the electronic device according to this disclosure;
FIG. 13 is an example of a free-arrangement type alarm screen provided by the electronic device according to this disclosure;
FIG. 14 is an example of a process of changing an alarm item display scheme according to a change of a remaining space of an alarm area provided by the electronic device according to this disclosure; and
FIG. 15 is an example of an application of a background screen for an alarm item provided by the electronic device according to this disclosure.

### DETAILED DESCRIPTION

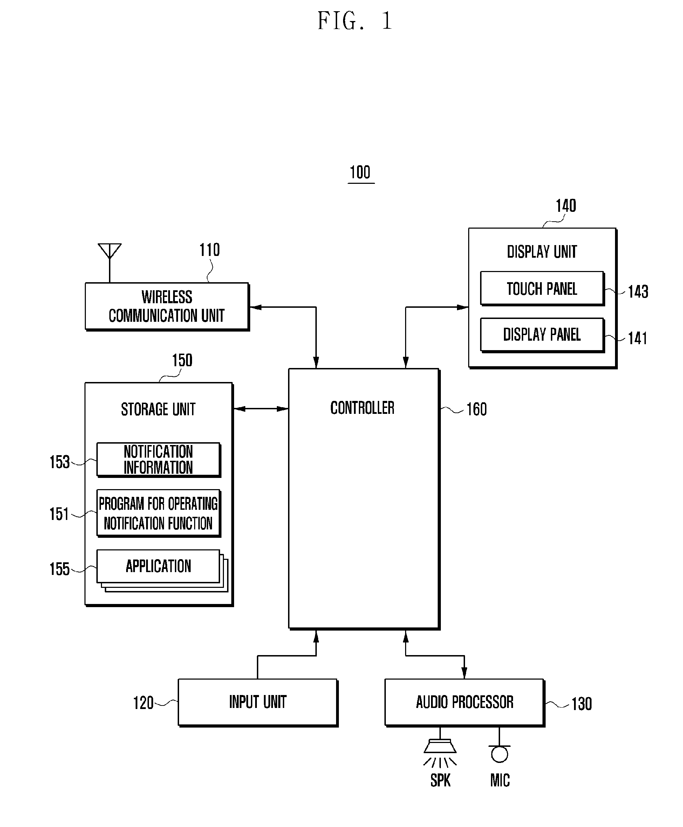

FIGURES 1 through 15, discussed below, and the various embodiments used to describe the principles of the present disclosure in this patent document are by way of illustration only and should not be construed in any way to limit the scope of the disclosure.

Those skilled in the art will understand that the principles of the present disclosure may be implemented in any suitably arranged electronic device. Hereinafter, exemplary embodiments of the present disclosure will be described in detail with reference to the accompanying drawings. In describing the exemplary embodiments of the present disclosure, descriptions related to technical contents which are well-known in the art to which the present disclosure pertains and are not directly associated with the present disclosure, will be omitted. Moreover, detailed descriptions related to configuration elements having substantially identical configurations and functions will be omitted.

For the same reason, in the accompanying drawings, some configuration elements may be exaggerated, omitted, or schematically shown, and a size of each element may not precisely reflect the actual size. Accordingly, the present disclosure is not restricted by a relative size or interval shown in the accompanying drawings.

FIG. 1 is an example block diagram illustrating a configuration of an electronic device providing a notification screen according to this disclosure.

Referring to FIG. 1, the electronic device 100 can include a communication unit 110, an input unit 120, an audio processing unit 130, a display unit 140, a storage unit 150, and a controller 160.

The electronic device 100 can provide various notifications according to an operation. For example, the electronic device 100 can perform a notification of receiving a corresponding message after the communication unit 110 receives a specific message.

The electronic device 100 can perform a notification of receiving a communication call in a user's absence when the communication unit 110 does not respond to the received communication call. The electronic device 100 can perform a notification of setting an alarm.

In an operation, the electronic device 100 can provide at least one piece of notification information through a notification tray or a notification screen (hereinafter, referred to as a notification screen) in the form of a notification object or a notification item (hereinafter, referred to as a notification item).

The notification screen can include the notification item corresponding to at least one piece of notification information, and can be output to the display unit 140 according to occurrence of an event. In the notification screen applied to the electronic device 100, a scheme or type of displaying a notification item can be differently configured according to a property of the notification information. For example, the electronic device 100 can determine a type of displaying the notification item according to at least one of a sort of applications, importance of the notification information, an amount or magnitude of the notification information, time lapsed after the notification information is created, number of notifications, number of the notification items displayed on the notification screen, and a size of a remaining space in which the notification item is not displayed on the notification screen. Further, the electronic device 100 can create and output a notification item corresponding to specific notification information in a predetermined display type on the notification screen. Accordingly, the user can instinctively identify specific meaning of the corresponding notification item through only a type of displaying the notification item corresponding to the notification information.

Here, the notification information can be a message generated by the electronic device 100. Further, the notification item can be display information including at least a part of information which is included in the notification information, and a predetermined display frame. A schedule display frame can further include at least one object such as a frame constituting the notification screen and a shortcut functional item fixedly arranged in the notification screen. The schedule display frame can be removed from the notification screen. Therefore, the electronic device 100 can output the notification screen constituted of only at least one notification item.

In an embodiment, the notification information can include at least one content type, such as at least one of text data, image data, and audio data. The notification item can include all information included in the notification information, or only a part of information according to the number, a magnitude or a display form of the notification items to be displayed on the notification screen. Further, at least one of amount and sort of the notification information to be displayed on the notification item according to a change of a display type or a display form can be controlled.

The communication unit 110 can support a communication function of the electronic device 100. For example, the communication unit 110 can include a mobile communication module in order to support a mobile communication function of the electronic device 100. The communication unit 110 can include a short-range wireless communication module in order to support a short-range wireless communication function of the electronic device 100. The communication unit 110 can include various modules such as a WiFi module, a wireless LAN module, a wired LAN module, and the like in order to support an Internet access function.

The communication unit 110 can receive a message provided by another electronic device. The received message can include a multimedia message, a chatting message, an E-mail message, and the like, which can include at least one of a short message including a text having a shorter length than a desired length, a text file, an image file, and an audio file. The notification information can be provided to the controller 160 in order to form the notification screen as the communication unit 110 receives the message. The message which the communication unit 110 receives can be output to the display unit 140 according to a sort of an application which is currently activated, under a control of the controller 160. Further, the notification information of indicating a failure of a message transmission through the communication unit 110 can be provided to the controller 160.

The communication unit 110 can receive various pieces of information with relation to an update of information on the electronic device 100. For example, the communication unit 110 can receive applications from a specific electronic market or a web market. The communication unit 110 can receive information related to an update or an upgrade of the electronic device 100 from a corresponding information providing device. In the operation, the communication unit 110 can receive information of indicating that there is an update of a specific application, or update information. The communication unit 110 can receive the update information of an application for a Social Network Service (SNS). Here, the update information of the application for the SNS can include contents such as a text, an image or the like provided by another user who is registered in the SNS. The update information of the application for the SNS can include various kinds of information provided by an SNS supporting provider. The communication unit 110 can provide the received various kinds of the information to the controller 160.

The communication unit 110 can receive information of other electronic devices which are detected in a process of supporting the short-range communication function. The communication unit 110 can perform a communication connection with at least one of other electronic devices. The communication unit 110 can perform a transmission and reception of various kinds of information to/from another electronic device through a connected short-range communication channel. In at least this operation, the communication unit 110 can provide the controller 160 with notification information on a search for another electronic device, connection notification information, and notification information on a transmission and reception.

The communication unit 110 can receive information according to a performance of a specific widget. For example, the communication unit 110 can receive information on weather from a service unit which provides the weather information according to an operation of the weather widget. The communication unit 110 can receive information on securities from a service unit according to an operation of a security widget. Further, the communication unit 110 can receive various kinds of information related to a game from a device which services a game according to an operation of a game application. The widget information, the game information and the like including the weather information and the security information which the communication unit 110 receives can be provided to the controller 160.

The various kinds of information which the communication unit 110 receives can be output in the form of a pop-up window on the display unit 140. Further, when the communication unit 110 receives the various kinds of information, notification information can be generated and a notification item corresponding to the generated notification information can be provided through the notification screen.

The input unit 120 can generate an input signal of the electronic device 100. The input unit 120 can include a key button. The key button can include a side key such as a volume control key, a hot key and the like, a home key, an electric power source turning-on/turning-off key, and the like. The input unit 120 can include a display unit 140 supporting a touch function. The input unit 120 can generate an input signal related to a search for and an operation of the notification screen. For example, the input unit 120 can generate an input signal for waking up a screen in a sleep mode and an input signal for releasing a lock screen. The input unit 120 can generate an input signal for calling the notification screen and an input signal for selecting at least one of notification items included in the called notification screen according to a user's operation. The input unit 120 can generate an input signal for selecting a display type of the notification item output on the notification screen, an input signal for changing the display type of the notification item, and an input signal for adjusting a display form of the notification item to be displayed, in response to a user's operation. The input signal generated in the input unit 120 can be provided to the controller 160 and converted into at least one instruction for performing a function according to a characteristic of the input signal.

The audio processor 130 can support at least one of audio signal outputting and collecting functions of the electronic device 100. For example, the audio processor 130 can support an output of a corresponding audio data when a reproduction of audio data which is stored in the storage unit 150 of the electronic device 100 or received from an outside is requested. For the purpose, the audio processor 130 can include a speaker. The audio processor 130 can support an audio signal collecting function if the electronic device 100 supports a voice call function. Further, the audio processor 130 can support the audio data collecting function in a process of collecting images. For the reason, the audio processor 130 can include a microphone.

The audio processor 130 can support an audio information output related to a supply of the notification screen. For example, the audio processor 130 can output a specific effect sound as an input event for calling the notification screen occurs. Furthermore, the audio processor 130 can output an effect sound or an announcement informing of an occurrence of notification information. The audio processor 130 can output different effect sounds or announcements in correspondence to a selection of each display type of notification item included in the notification screen. An output of audio data such as an effect sound or an announcement of the audio processor 130 can be omitted according to a user's setting or a change of a design by a designer. Alternatively, the audio data output can be substituted with vibration or a lamp. A vibration pattern and a flicking of the lamp can be changed according to a display type of the notification item corresponding to the notification information.

For example, when a first display type of notification information is generated, at least one of a first type vibration pattern, a first type effect sound, and a first type lamp flicking can be performed. When a second display type of notification information is generated, at least one of a second type vibration pattern, a second type effect sound, and a second type lamp flicking can be performed.

The display unit 140 can output various screens related to an operation of the electronic device 100. For example, the display unit 140 can output a screen in a sleep state in which a supply of electric power is stopped. The display unit 140 can output a standby screen including at least one icon or widget or a menu screen including at least one menu. The display unit 140 can display an indicator which indicates a communication state, a battery state, an alarm setting state, a bell sound or vibration state, and the like. The indicator can be displayed in a region of a status bar. The region of the status bar can be arranged at a predetermined position, such as an upper end portion, of the display unit 140.

The display unit 140 can display an alarm screen according to an occurrence of a specific input event. For example, when a desired touch event occurs in the status bar region or a region adjacent to the status bar, the display unit 140 can display the notification screen according to the corresponding touch event. The notification screen can be displayed on a specific function screen which is currently displayed. At this time, the notification screen can be displayed with predetermined transparency, and the specific function screen can be partially projected. Alternatively, the notification screen can be opaquely output. Although the notification screen can include a notification item, a notification screen excluding the notification item can be displayed when there is no occurrence of the notification information according to a condition. At least one selection item related to a function of the electronic device 100 can be provided on a side of the notification screen. A display type of the notification items displayed on the notification screen can be differently determined according to a property of the notification information. The notification item can be displayed in at least one manner of a list form in which only one notification item is arranged in a longitudinal or transverse direction according to the property of the notification information and plural items are arranged in the longitudinal or transverse direction, a grid form in which plural items are arranged in longitudinal and transverse directions, and a free arrangement form in which items are freely arranged specific positions without distinction of longitudinal and transverse directions. The notification item displaying form will be described in detail with reference to exemplary views of screens.

The display unit 140 can include a touch panel 143 and a display panel 141 when a touch function is supported. The display panel 141 can output various screens related to a notification screen and an operation of the notification screen. The touch panel 143 can generate a touch event for calling a notification screen, a touch event for selecting a notification item included in the notification screen, a touch screen for changing a display type of the notification item, a touch event for varying a display form of the notification item, and the like according to a user's operation. The above mentioned touch event can include a drag event, a tap event, a sweep or swipe event, a long press event, a pinch event, a multi-point touch event, and the like.

The storage unit 150 can store various data and programs used in an operation of the electronic device 100. For example, the storage unit 150 can store an operating system of the electronic device 100. Further, the storage unit 150 can store a program supporting various user functions, such as a file reproduction function, a file editing function, a voice call function, a web access function, a cloud function, and the like, which the electronic device 100 supports. The storage unit 150 can store data generated in a performance of a corresponding function. The storage unit 150 can store a program 151 for executing a notification function, notification information 153, and at least one application 155.

The at least one application 155 can be an application supporting a specific function of the electronic device 100. For example, the application 155 can include a voice call application, a chatting application, a web browser application, an alarm application, an application supporting various widget functions, a map application, a video reproduction application, a music file reproduction application, a file preview application and the like.

The above mentioned various applications 155 can generate various kinds of notification information 153 during an operation thereof.

The generated notification information 153 can be provided to the storage unit 150 and the controller 160.

The notification information 153 can be information generated according to the operation of the specific application 155. For example, the notification information 153 can include various kinds of information related to an operation of the communication unit 110 as described herein. Further, the notification information 153 can include various kinds of information related to a specific user function. For example, the notification information can be weather information. The notification information 153 can be alarm setting information, notification execution information, or schedule information. For example, the notification information can be information on a state of a battery. The notification information 153 can be message receiving information, update information, and download related information. The above-mentioned notification information 153 can have a priority. An amount of information included in the notification information can be different. The notification information 153 can include at least one of a text, an image, and an audio.

The electronic device 100 can store a notification item corresponding to the notification information 153. In at least the case that the notification item corresponding to the notification information 153 is previously generated and stored, an operation property can be rapidly provided when an output of the notification screen is requested. Thus, the electronic device 100 may need not to previously store the notification item. The electronic device 100 can generate and output the notification item in real time based on the notification information 153 when a display of the notification screen is requested. A storage manner or a non-storage manner can be selectively changed according to intention of a designer.

The notification function operating program 151 can include a routine of collecting the notification information, a routine of analyzing the collected notification information, a routine of determining a display type of the notification information, a routine of constituting a notification item according to a display type, a routine of constituting the notification screen including the notification item, and a routine of outputting the notification screen. The notification function operating program 151 can include a routine of supporting a change of a display type of the notification item, and a routine of supporting a change in a shape of the displayed notification item. Further, when a specific notification item is selected on the notification screen, the notification function operating program 151 can include a routine of executing an application related to a corresponding notification item.

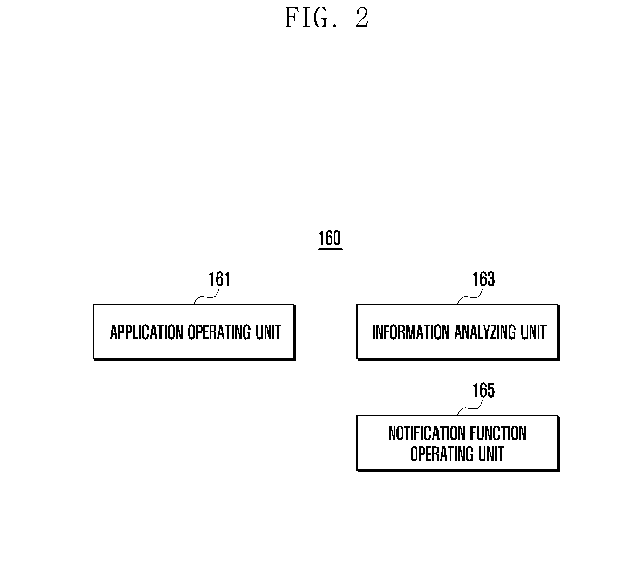

The controller 160 can support a signal process and a data process for operating the electronic device 100. For example, the controller 160 can perform a function according to a structure and an output of the notification screen and a selection of the notification item. The structure of the controller 160 will be described in detail with reference to FIG. 2.

FIG. 2 is an example block diagram illustrating a configuration of the controller 160 of the electronic device 100 according to this disclosure.

Referring to FIG. 2, the controller 160 can include an application operating unit 161, an information analysis unit 163, and a notification function operating unit 165. The application operating unit 161, the information analysis unit 163, and the notification function operating unit 165, which can be included in the controller 160, can be provided in the form of a processor, respectively. Further, the units can include a processor for processing a request for outputting the notification screen, a processor for analyzing at least one of a property of the notification information generated according to an operation of the electronic device when an output of the notification screen is requested and a user's setting for the notification information, a processor for selecting a specific display type among a plural display types according to the analysis result, a processor for generating a notification item including at least a part of content of the notification information based on the selected display type, and a processor for displaying the notification screen including the notification item, respectively. These processors can be provided to the storage unit 150 in the form of modules, and can operate as a corresponding processor when the controller 160 loads them. Thus, the electronic device 100 can include a computer readable storage medium including the above-mentioned processors.

The application operating unit 161 can include at least one processor in order to operate an application 155 stored in the storage unit 150. The application operating unit 161 can activate an input unit 120, a display unit 140 having an input function, or a specific application 155 according to predetermined schedule information. Further, the application operating unit 161 can control a processing of various kinds of information according to the operation of the corresponding application 155.

For example, the application operating unit 161 can control a processing of various kinds of information according to the operation of the corresponding application 110. The application operating unit 161 can control an activation of a phone book and a connection of a communication channel for communication with another electronic device. The application operating unit 161 can control a transmission and reception of a message, a transmission and reception of a voice, a transmission and reception of an image, a transmission and reception of a specific web document, and the like. In an operation at least related to the communication unit 110, the application operating unit 161 can identify an occurrence of the notification information, and can provide the information analysis unit 163 with the notification information. For example, the application operating unit 161 can collect notification information on a call in an absence of a user, notification information on a reception of a message, notification information on a download of a requested file, and information such as weather information or security information which can be requested periodically or aperiodically.

In an embodiment, the application operating unit 161 can control an operation of an alarm application. The application operating unit 161 can collect set alarm information as notification information. The application operating unit 161 can collect each piece of alarm information as plural pieces of notification information if plural pieces of the set alarm information are present.

Herein, the alarm information can have a different importance, and thus the collected notification information also can have a different importance. If an execution of an alarm is terminated without a request for a predefined stop, the application operating unit 161 can collect the notification information on the termination of the alarm.

In an embodiment, the application operating unit 161 can control an operation of a scheduling application. During the operation, the application operating unit 161 can collect today's scheduled items as notification information. Alternatively, the application operating unit 161 can collect scheduled items as notification information within a predetermined time, such as in past or future from a present time point. The application operating unit 161 can collect the scheduled items having a desired grade of importance as notification information. For at least this purpose, the electronic device 100 can provide an importance setting for each scheduled item when it supports the scheduling application. The importance setting can have a desired level or grade. The application operating unit 161 can operate a time and an importance complexly and can collect scheduled items having an importance higher than a desired level within a desired time as notification information.

In an embodiment, the application operating unit 161 can control an update operation of applications 155. The application operating unit 161 can identify the presence or the absence of update information of the application 155. For at least this purpose, the application operating unit 161 can control access to the service providing apparatus providing the application 155 periodically or aperiodically. Alternatively, the application operation unit 161 can identify the presence of update information which the service providing apparatus provides in a push type. The application operating unit 161 can get access to the service providing apparatus and control a reception of corresponding update information. In an operation, the application operating unit 161 can control notification information on the presence of the update information, a collection of notification information on a reception of the update, and the like.

In an embodiment, the application operating unit 161 can control a collection of notification information on a state of a battery. The application operating unit 161 can control a collection of notification information on a delay of a data transmission or impossibility of processing. The application operating unit 161 can control a collection of notification information on a remaining storage region of the storage unit 150 to which specific data are not allocated. The application operating unit 161 can control a collection of notification information on a connection and a disconnection of an external device.

The information analysis unit 163 can analyze the notification information provided by the application operating unit 161. Alternatively, the information analysis unit 163 can analyze the notification information 153 stored in the storage unit 150. When a specific input event occurs in an operation of the electronic device 100, a notification screen can be output. At this time, the information analysis unit 163 can receive and analyze the notification information output on the notification screen from the application operating unit 161. If the notification information 153 occurs, the application operating unit 161 can store the notification information 153 in the storage unit 150 through the above-described operation. Then, when an output of the notification screen is requested, the information analysis unit 163 can analyze the notification information 153 stored in the storage unit 150. Alternatively, the application operating unit 161 can provide the notification information to the information analysis unit 163, and the information analysis unit 163 can control to firstly store the notification information in the storage unit 150. Then, when an output of the notification screen is requested, the information analysis unit 163 can identify and analyze the notification information stored in the storage unit 150. Further, the information analysis unit 163 can determine the display type to be applied to the analyzed notification information. The display type can include at least one of a list type, a grid type, and a free arrangement type, which are described herein.

This display type can be selected according to a property of the corresponding notification information in a process of outputting the notification item corresponding to the notification information. Further, if a user does not previously set the specific notification information, the display type can be selected according to a user' s setting and can be used for a generation of a notification item corresponding to the corresponding notification information.

Hereinafter, the list type, the grid type, and the free arrangement type will be described. The electronic device 100 can support that the user freely generates the display type. For at least this purpose, the electronic device 100 can provide a display type generator for generating the display type. The display type generator can include an item for selecting a kind of the specific notification information, and an item for defining a display type of the corresponding notification information. Herein, the item for defining the display type can include a sub-item for selecting any one of the list type, the grid type, and the free arrangement type, which are disclosed herein. Further, the display type defining item can provide a sub-item for drawing the display type and can support that the user generates a predetermined display type. The display type which the user generates freely can belong to the free arrangement type, or can be added to a separate item of the display type.

The display type can include a list type in which the notification items are arranged only in a longitudinal axis or only in a transverse axis. The list type notification item can be arranged with a desired length in the longitudinal direction or in the transverse direction of the electronic device 100. Thus, in the list type, only one item can be displayed in the longitudinal direction or the transverse direction. The list type in which the notification item is displayed by a desired length in the longitudinal direction the electronic device 100 when the electronic device 100 is arranged in a portrait direction will be described herein. However, the present disclosure may not be limited thereto, and the list type can be implemented in the form in which one notification item is displayed by a desired length in a landscape direction when the electronic device is arranged in the landscape direction.

The display type can include a grid type in which plural items are arranged in longitudinal and transverse direction. The grid type can have a size and an arrangement in which the plurality of notification items are displayed in the longitudinal and transverse directions. The grid type notification item can have a changed size according to a size of the screen. Although the grid type notification item has a regular square shape in the present disclosure, the present disclosure may not be limited thereto. For example, the grid type notification item can be prepared in a rectangular shape or a polygonal shape. Alternatively, the grid type notification item can be prepared in an elliptical shape.

The display type can include the free arrangement type in which the notification items are placed at a random position, of which a surface is partially moved, or of which circumference is a closed free-curved line. The free arrangement type notification item can have various shapes or colors. The free arrangement type notification item can have at least one of shapes, colors, a position of the notification screen, and an extent of a movement according to various factors such as an importance, contents, frequency of the corresponding notification information, or a user's setting for the notification information.

The information analysis unit 163 can provide the notification function operating unit 165 with notification information and information on the display type to be applied to the corresponding notification information. Alternatively, the information analysis unit 163 can store the notification information and the display type information applied to at least one piece of the notification information in the storage unit 150.

The notification function operating unit 165 can constitute the notification screen when a call for the notification screen is received. For example, the notification function operating unit 165 can constitute the notification screen when at least one of a touch event for calling the predetermined notification screen, a hard-key input event, and a specific motion gesture occurs. In order to recognize the specific motion gesture, the electronic device 100 can include a motion sensor. The motion sensor can include at least one of various sensors such as a gyro sensor, an acceleration meter, a proximity sensor, a geo-magnetic sensor, and an optical sensor.

When the information analysis unit 163 stores the notification information 153 and the display type information in the storage unit 150, the notification function operating unit 165 can identify the notification information 153 and the display type information stored in the storage unit 150. Alternatively, when the information analysis unit 163 provides the notification information 153 and the display type information, the notification function operating unit 165 can control to store the corresponding information in the storage unit 150. A time point when the notification function operating unit 165 reads and operates information can be changed according to a time point when the information analysis unit 163 provides information. For example, the notification function operating unit 165 can omit an operation of a separate storage unit 150 when receiving the display type information and the notification information from the information analysis unit 163 at a time point when the notification screen is constituted. To the contrary, when the notification information 153 and the display type information are stored independently from the constitution of the notification screen, the notification function operating unit 165 can receive only information on a storage position at which the corresponding information is stored from the information analysis unit 163 and can control the operation of the corresponding information at a time point when the notification screen is constituted.

The notification function operating unit 165 can extract at least a piece of information included in the notification information 153 and can generate a specific display type of the notification item based on the extracted information. Further, the notification function operation unit 165 can constitute the notification screen by using the specific display type of the notification item. Here, the notification function operating unit 165 can control an amount and a kind of information to be extracted from the notification information 153 according to the display type.

For example, the notification function operating unit 165 can extract only text information from a list type of the notification information and can generate the notification item based on the extracted text information. The notification function operating unit 165 can extract only text information from a list type of the notification information and can generate the notification item based on the extracted text information. The notification function operating unit 165 can determine a position of the notification item on the notification screen according to the information on the corresponding display type. Further, the notification function operating unit 165 can determine a position of the notification item on the notification screen according to the importance, a frequency, and the like of the notification information.

The notification function operating unit 165 can change a display type of the notification item displayed on the notification screen according to an input event. The notification function operating unit 165 can provide a menu item in order to change the display type of the specific notification item in the state that the notification screen is output on the display unit 140. The menu item can be prepared in a region in which the notification item is displayed or in a separate region of the notification screen. The menu item can be changed in any one of the list type, the grid type, and the free arrangement type. At this time, the display type of the menu item can be changed in a toggle manner according to the occurrence of the input event. Alternatively, the menu item can be provided in the form of a menu window including the list type items, the grid type items, and the free arrangement type items. When the specific display type is selected, the notification function operating unit 165 can identify the notification information corresponding to a corresponding notification item and can reconstruct the notification item suitable for the changed display type based on the notification information.

On the other hand, the electronic device 100 may not provide the menu item, and can change the display type of the notification item when the predetermined specific input event occurs. In an embodiment, the input event can include a touch event in which a specific notification item is selected and then dragged or swiped and a touch event in which a specific notification item is long-pressed. Furthermore, an event for changing the display type of the notification item can include a hardware key input signal. When a specific hardware key input signal is output, it can be possible to change a display type of at least one of the notification items displayed on the notification screen. For example, when an input signal is received from a predetermined hot key, the notification function operating unit 165 can control to change and output all the notification items included in the notification screen in at least one of the list type, the grid type, or the free arrangement type. Furthermore, the notification function operating unit 165, for example, can change all the list type notification items into the grid type when the hot key input signal is generated.

The notification function operating unit 165 can constitute a new display type notification item so that the new display type notification item further includes information which is not displayed in the previous display type or so that at least a part of information displayed in the previous display type is removed. Further, the notification function operating unit 165 can control to display the changed notification item on the notification screen. Furthermore, the notification function operating unit 165 can provide the display type changing information of the notification item to the information analysis unit 163. The information analysis unit 163 can store the display type changing information which is provided by the notification function operating unit 165 and can determine the display type of the notification information generated in an identical kind of or an identical application as the changed display type.

The notification function operating unit 165 can control to change the display type of the notification item according to the occurrence of the input event. For example, the notification function operating unit 165 can adjust a size of the notification item according to a corresponding input event when an input event for changing the size occurs after the specific notification item is selected. The notification function operating unit 165 can adjust an amount and a kind of information output to the notification item of which the size is adjusted. For example, the notification function operating unit 165 can reduce or increase the amount of the information included in the corresponding notification item according to the change of the size of the notification item. In an embodiment, the amount of the information can be an amount of text, a size of an image, a number of images, and the like. Furthermore, when the size of the notification item is reduced, the notification function operating unit 165 can remove a previously displayed image. To the contrary, when the notification item has an increased size, the notification function operating unit 165 can control to add an image which is not displayed. The operation of adding the image can include at least one of an operation of arranging an image with a desired size in a predetermined region of the notification item and an operation of arranging an image in a background region of the notification item.

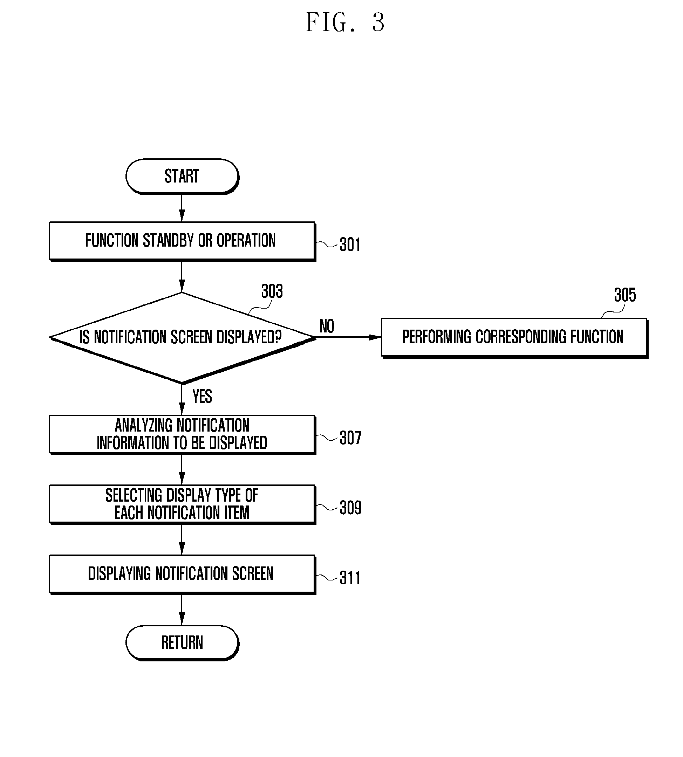

FIG. 3 is an example flowchart illustrating a process of displaying the notification screen of the electronic device for operating the notification function according to this disclosure.

Referring to FIG. 3, in the process of displaying the notification screen of the electronic device for operating the notification function of the present disclosure, in operation 301, the controller 160 can control a standby of a specific function or an operation of the specific function. For example, the controller 160 can control to output a standby screen, a menu screen, and an icon screen to the display unit 140. The controller 160 can control a music file reproduction. The controller 160 can control a video file reproduction, an execution of a game, and a performance of a broadcasting function.

In operation 303, the controller 160 can determine whether a corresponding input event is an event for displaying a notification item or a notification screen when a specific input event is generated by the input unit 120 or the display unit 140 with an input function.

In operation 303, if it is determined that the corresponding input event is not the event for displaying the notification item or the notification screen, the controller 160 can perform operation 305, so as to control the performance of a function according to the corresponding input event. For example, the controller 160 can control the music file reproduction which is performed according to the corresponding input event. Further, the controller 160 can perform a voice call according to a sort of the input event.

The controller 160 can control to store the notification information temporarily or semi-permanently when the notification information is generated in operation 305. In the process of storing the notification information, the controller 160 can determine the display type according to a property of the notification information. The controller 160 can process the notification information, so as to control to generate a notification item according to the determined display type. In an embodiment, the operation of generating the notification item can be performed after a display of the notification screen is requested.

The property of the notification information can include at least one of a kind of an application in which the notification information is generated, an importance or priority of the notification information, a kind and an amount of contents included in the notification information, a number of the notifications generated by an identical kind of or an identical application, a number of the notification items to be displayed, a time when the notification information is generated, a position where the notification information is generated, and a kind of an application of the electronic device 100 executed at a time point when the notification information is generated. In order to collect information on the position where the notification information is generated, the electronic device 100 can further include an information collecting module, for example, a GPS module. The kind and amount of the contents can be a sort of a file such as a text or an image included in the notification information and an amount of data of the corresponding file. The importance and the priority can be defined by application designers, and may be changed by user' s setting.

When an input event for displaying the notification item or the notification screen occurs in operation 303, the controller 160 can perform operation 307 so as to analyze the notification information to be displayed. The input event for displaying the notification screen can include a predetermined hardware key selection event, a predetermined touch event, a predetermined motion gesture event, or the like. For example, the input event can be a touch event corresponding to a motion in which a touch on a status bar region of a screen is executed and dragged in a desired direction. Alternatively, the input event can be a motion in which the electronic device 100 is tilted or shaken in a desired direction.

Further, the input event can include a case in which a user is captured as an object and then it is analyzed whether user's eyes focuses on the status bar region for a predetermined time. For at least this purpose, the electronic device 100 can include a camera module that can capture a user's face at a specific time point and can control to analyze the captured image when the electronic device 100 is changed by predetermined period or from a sleep state to a wakened state.

The controller 160 can determine whether the notification information 153 stored in the storage unit 150 in order to analyze the notification information. Then, if it is determined that there is no stored notification information 153, the controller 160 can display the notification screen on which the notification item is not displayed, in operation 311. On the other hand, if it is determined that the notification information 153 is stored in the storage unit 150, the controller 160 can analyze a property of the corresponding notification information 153. Then, in operation 309, the controller 160 can determine the display type to be applied to the notification item according to the property of the notification information 153. When the display type is determined, the controller 160 can generate the notification item based on the notification information 153 and can constitute and can display the notification screen of the notification item generated in operation 311. The controller 160 can determine an arrangement position of the notification item according to the property of the notification items when the notification screen is constituted. For example, the controller 160 can arrange the notification item with a relatively high importance at an upper portion or a lower portion.

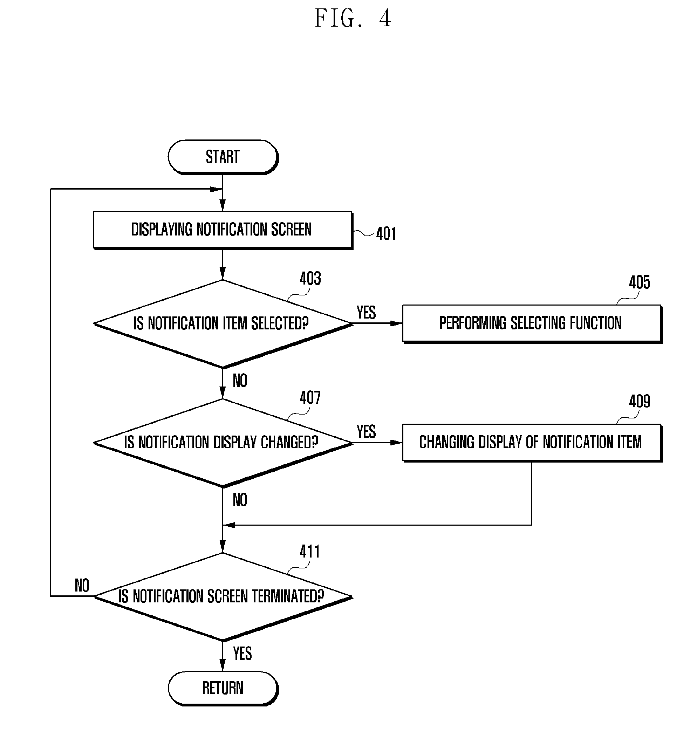

The controller 160 can perform a return operation supporting operations when the notification screen is displayed, as shown in FIG. 4.

FIG. 4 is an example flowchart illustrating a process of operating the notification screen of the electronic device according to this disclosure.

Referring to FIG. 4, in operation 401, the controller 160 of the electronic device 100 can control to output at least one notification item or the notification screen including at least one notification item on the display unit 140 according to an occurrence of the predetermined input event. Herein, the predetermined input event can include at least one of various events such as a predetermined touch event, a predetermined hardware key event, and a predetermined motion event, as described herein. In order to display the notification screen, the controller 160 can identify the presence or the absence of the notification information 153 and can generate a notification item corresponding to the notification information 153 if the notification information 153 is present, so as to constitute the notification screen, as at least described above with reference to FIG. 3. In an embodiment, if the notification information 153 is absent, the controller 160 can output the notification screen in which the notification item is not included. As disclosed herein, it will be described as an example that the notification information is present.

When the notification screen is displayed, in operation 403, the controller 160 can determine whether an input event for selecting the notification item occurs. For example, the controller 160 can determine whether a touch event for selecting the notification item occurs. If it is determined that the event for selecting the notification item occurs in operation 403, the controller 160 can perform operation 405 and can control to perform a specific function corresponding to the selected notification item of the electronic device 100. Alternatively, the controller 160 can control to additionally display related information of an application or notification information corresponding to the selected notification item.

For example, if the notification item corresponding to message notification information is selected, the controller 160 can activate a message application in order or view a detail of the message. Further, the controller 160 can control to output a screen for the activation of the message application which includes message content to the display unit 140. Furthermore, if a notification item corresponding to the message notification information is selected, the controller 160 can control to output the message notification information to the display unit 140.

If a notification item corresponding to update notification information is selected, the controller 160 can activate an application to which an update is applied or can perform automatic access to a market or a specific service apparatus from which the update information is downloaded. Further, the controller can control to download the update information and to apply a corresponding application according to the occurrence of the event.

When a notification item corresponding to an operation of a SNS service application is selected, the controller 160 can control to activate the corresponding SNS service application and to output a screen according to the activation. When a notification item according to an operation of a predetermined widget is selected, the controller 160 can control to output a screen for activating the widget which includes the received information. When a notification item related to schedule information is selected, the controller 160 can control to activate a scheduler. Thus, the display unit 140 can output the scheduler activation screen which includes schedule information related to the notification item.

When a specific functional screen according to the selection of the notification item is output, the controller 160 can automatically remove the notification screen from the display unit 140. Furthermore, the controller 160 can control the notification screen to be displayed after a specific function is terminated.

In operation 403, if there is no occurrence of the event for selecting the notification item, the controller 160 can perform operation 407, so as to determine whether an input event for changing a display of a notification occurs. If the display of the notification is changed in the operation, the controller 160 can change a display form of the notification item according to the corresponding event or a display type of the notification item in operation 409. The display type of the notification item can be changed into any one of the list type, the grid type, and the free arrangement type. The display form of the notification item can be maintained in an identical type, in which a size of the notification item is changed or a display position of the notification item is changed.

If there is no occurrence of the input event for changing the notification display in operation 407, the controller 160 can perform operation 411, so as to determine whether an event for terminating the notification screen occurs. In an embodiment, if there is no occurrence of the event for terminating the notification screen the controller 160, the controller 160 can return to operation 401, so as to support that the above operations are carried out again. On the other hand, if there is occurrence of the event for the termination of the notification screen, the controller 160 can terminate the notification screen and can control to return to a previous function screen. For example, the controller 160 can control to return to a state of displaying a standby screen if the standby screen is output before the notification screen is displayed. When a screen of operating a chatting application is output before the notification screen is displayed, the controller 160 can control to return to a state that the screen of operating the chatting application is displayed. If there is no occurrence of the event for the termination of the notification screen and a predetermined time lapses, the controller 160 can control the display unit 140 of the electronic device 100 to be turned off and enter a sleep mode.

If an event for releasing the sleep mode, such as a waking event occurs, the controller 160 can control to maintain the display state of the notification screen.

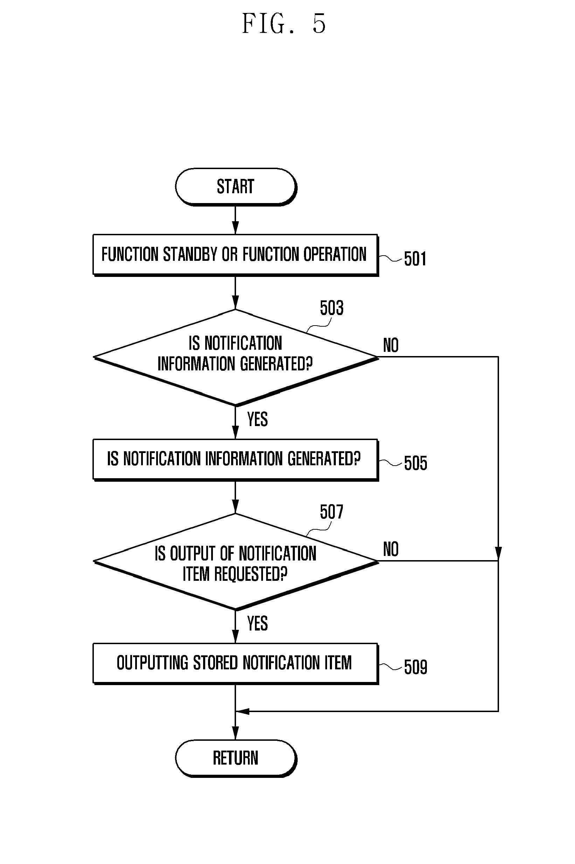

FIG. 5 is an example flowchart illustrating a process of displaying the notification screen of the electronic device according to this disclosure.

Referring to FIG. 5, according to the method of operating the electronic device, the controller 160 can perform a standby of a function or an operation of a specific function in operation 501.

The controller 160 can determine whether the notification information 153 is generated in operation 503. If there is no generation of the notification information 153, the controller 160 can branch off to operation 505 and can support a previous function or can control to perform a specific function according to the occurring input event.

If the notification information 153 is generated in operation 503, the controller 160 can branch off to operation 505, so as to generate and store the notification item corresponding to the notification information 153. For at least this purpose, the controller 160 can perform an analysis of the property of the notification information 153. Further, the controller 160 can determine a display type according to a sort, a priority, an amount, and the like of the analyzed notification information 153. The controller 160 can generate the notification item based on the determined display type and the notification information 153. The controller 160 can store the notification information 153 and the notification item in the storage unit 150. If there is no occurrence of the notification information 153, the controller 160 can control to branch off to operation 509.

After operation 505, the controller 160 can identify whether an output of the notification item is requested in operation 507. If there is a request for outputting the notification item, the controller 160 can branch off to operation 509 and can control to output the notification item stored in the storage unit 150 to the display unit 140. At this time, the controller 160 can constitute the notification screen with the stored notification item and can control to output the notification screen to the display unit 140.

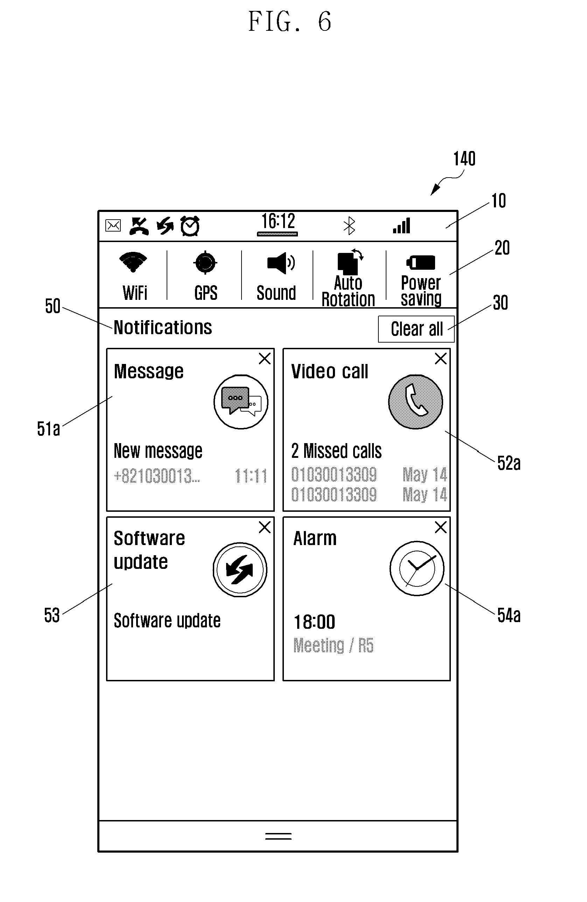

FIG. 6 is an example view illustrating an example of a screen interface of the electronic device according to this disclosure.

Referring to FIG. 6, when a predetermined input event occurs, the display unit 140 of the electronic device 100 can output a notification screen. For example, if a touch event occurs according to an operation of dragging a touch in a desired direction after a user touches the status bar region 10, the display unit 140 can output a notification screen. The notification screen can include a short-cut function region 20, an erasing region 30, and a notification region 50.

The short-cut function region 20 can include items for a change of a specific function or an on-off control which is provided by the electronic device 100. For example, the short-cut function region 20 can include a WiFi item for performing a turning on and off of WiFi, a GPS item for performing a turning on and off of a GPS function, an item for changing an event output in a bell sound, vibration, silence, and the like, a landscape/portrait converting item for converting a landscape mode and a portrait mode of a screen, and an item for setting a battery. Also, the short-cut function region 20 can further include an additional function item which is hidden in a current screen, such as an airplane mode on/off item, a Bluetooth on/off item, synchronization on/off item, a hot spot on/off item, and the like. The hidden item can be output to the display unit 140 by a touch event occurring in the short-cut function region 20, a specific gesture event, or a hardware key event. If the hidden items are output to the display unit 140, at least one of the hidden items to be displayed can be removed from the display unit 140.

In the erasing region 30, an erasing item which is capable of removing all the notification items displayed on the notification region 50 can be arranged. The erasing item can be provided in the form of a virtual touch button. If there is no notification item in the notification region 50, the erasing item can be displayed in the erasing region 30.

The notification region 50 can be a region in which at least one notification item may be displayed. If there is no notification item, the notification region 50 can be displayed as an empty region. It can be assumed that the notification region 50 has four notification items. For example, the notification items can include a first type message item 51a, a first type voice call item 52a, an update item 53, and a first type alarm item 54a. Here, the notification region 50 can include more various items according to an operation of functions of the above-mentioned electronic device 100.

The first type message item 51a is an item for notifying a reception of a message, and may be displayed in the grid type. The first type message item 51a may be an item corresponding to at least one message. For example, with respect to the reception of plural messages, the first type message item 51a may be displayed in the notification region 50. At this time, the first type message item 51a may be an item corresponding to at least one message. The first type message item 51a may include text information and image information in order to show an item related to the message.

The first type voice call item 52a can be an item for notifying a reception of a voice call in an absence of a user. The first type voice call item 52a can be displayed in the grid type. The grid type can be a form with a size in which a plurality of items is arranged in longitudinal and transverse directions as described above.

The update item 53 can be an item for notifying of an update of middleware or software of the electronic device 100 or a specific application. In at least the case that a service device for providing update information provides update information in a push form or the electronic device 100 accesses to the corresponding service device, the update related information can be received. The update item 53 can be generated according to the reception of the update related information. If the update item 53 is selected, an update related process can be carried out. For example, if there is update information which is received and stored, the electronic device 100 can carry out an information update. If there is no update information which is received and stored, the electronic device 100 can perform an access to the service device for providing the update information and can carry out an information download and the information update.

The first type alarm item 54a can be an item for displaying alarm information according to an alarm setting or a schedule setting. Furthermore, the first type alarm item 54a can be an item for notifying of a sudden termination if an alarm according to the setting is not terminated by an operation of a user. The first type alarm item 54a can be an item for previously notifying of an alarm of a time point which the user sets. For example, if an alarm is set to operate at 3 p.m., the first type alarm item 54a can be output to the alarm region 50 from 2:30 p.m. The first type alarm item 54a can include an alarm setting time and information stored together at the setting of the alarm, such as location information and memo information.

The update item 53 and the first type alarm item 54a can be displayed in the grid type. The above-mentioned alarm items can include a removal item for independently removing each item.

On the other hand, arrangement positions of the above-mentioned notification items in the notification region 50 can be determined according to a predetermined priority. For example, if the first type message item 51a has a relatively higher priority compared with other items, the first type message item 51a can be arranged at a left-upper portion of the notification region 50. If the first type voice call item 52a has a lower priority than the first type message item 51a but a higher priority than other items, the first type voice call item 52a can be arranged at a right-upper portion of the notification region 50. On the other hand, the first type alarm item 54a can be changed in its position depending on an alarm advent time. For example, if the advent time of the first type alarm item 54a is longer than one hour, a relatively lower priority can be set to the first type alarm item 54a, and also as a time flows to the advent time, the priority to the first type alarm item 54a can be gradually increased. If the priority to the first type alarm item 54a is changed, the position of the first type alarm item 54a can be moved from a right-lower portion to a left-upper portion of the notification region 50. The position movement manner of the first type alarm item 54a can be changed according to an intention of a designer or an operation of a user.

An arrangement order of the alarm items can be determined with reference to a sequence of an occurrence according to a user's setting. For example, if the first type message item 51a is an item corresponding to notification information which is recently generated, the first type message item 51a can be arranged at a predetermined position, such as a left upper portion of the notification region 50. Furthermore, the arrangement of the notification items can be determined by complexly applying a generated order and a priority of the notification items. For example, when the first type message item 51a has a relatively higher priority than the first type voice call item 52a although the first type voice call item 52a is an event which is recently generated, the first type message item 51a can be arranged at a left upper portion of the notification region 50. If the first type voice call item 52a and the first type message item 51a have the identical priority, the arrangement of them can be determined according to the generated order.

With at least respect to the above description, the left upper portion can be defined as a region in which an item corresponding to the most important or most recent event is arranged. However, the description of the present disclosure may not be limited thereto and the left upper portion can be changed in another region such as a right upper portion or a central region according to the intention of the designer or a change of the user setting.

The status bar region 10 can include images with a predetermined size corresponding to the notification item. For example, an image of notifying of a reception of a message, an image of notifying of a reception of a voice call in an absence of a user, an image of notifying of an update and the like can be displayed in the status bar region 10. Further, information on a current time, information on intensity of a signal received in the communication unit 110, and information on a state of a battery can be displayed in the status bar region 10. Here, some pieces of information displayed in the status bar region 10 can be synchronized with the notification item. For example, the image of notifying of the reception of the message can be synchronized with the first type message item 51a. The image of notifying of the reception of the message can be displayed while the status bar region 10 is displayed and can be removed from the status bar region 10 according to the removal of the first type message item 51a and an occurrence of the event for identifying the reception of the message. The image of notifying of the reception of the voice call in the absence of the user can be removed from the status bar region 10 through an identification of the reception of the voice call in the absence of the user or a removal or identification of the first type voice call item 52a. The image of notifying of the update can be removed from the status bar region 10 according to a removal or an identification of the update item 53 or a performance of the update. When an event for a removal or an identification of the notification items occurs or the erasing item of the erasing region 30 is selected, the display unit 140 can remove the notification items displayed in the notification region 50.

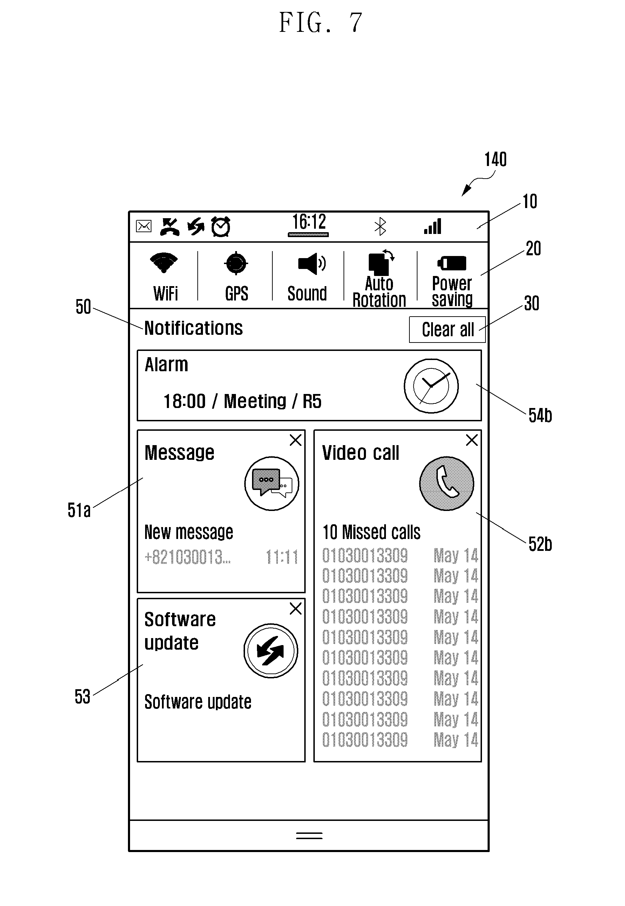

FIG. 7 is an example view illustrating an example of a screen interface of the electronic device 100 according to this disclosure.

Referring to FIG. 7, the display unit 140 can output the notification screen. The notification screen can include a short-cut function region 20, an erasing region 30, and a notification region 50. The status bar region 10 can maintain a previous display state.

Thus, the status bar region 10 can be regarded as a constitution of the notification screen output to the display unit 140. Alternatively, the status bar region 10 can be regarded as a region distinguished from the notification screen. The short-cut function region 20 and the erasing region 30 can have the same display state and function as those of the regions described with reference to FIG. 6, and thus the description of the short-cut function region 20 and the erasing region 30 will be omitted.

The notification region 50 shown in FIG. 7 can include a second type alarm item 54b, the first type message item 51a, the second type voice call item 52b, and an update item 53.

The second type alarm item 54b can be displayed in the list type. The list type can be an arrangement in which only one item is displayed in a longitudinal or transverse direction. For example, as shown in FIG. 7, in the transverse direction of the second type alarm item 54b, there can be no space in which other items except for the second type alarm item 54b are arranged. Here, the list type can be an item display scheme when an item of a desired direction, such as a longitudinal direction or a transverse direction, has a length longer than half the length of a longitudinal or transverse direction of the notification region 50. The second type alarm item 54b displayed in the list type can have a different importance in comparison with the items displayed in the grid type. For example, the list type item can be an item having a relatively higher importance or priority than the grid type item. Alternatively, the list type item can be an item having a relatively lower importance or priority than the grid type item. Further, the list type item can be an item having relatively more or less display information than the grid type item. Further, the list type item can be an item having a relatively larger or smaller frequency of the notification information than the grid type item.

In comparison with the first type alarm item 54a described with reference to FIG. 6, the second type alarm item 54b can be an item having a relatively higher importance or priority. As described herein, even in the case of the identical item, the importance of the item can be changed as a time lapses, and thus the first type alarm item 54a can be changed into the second type alarm item 54b. Alternatively, when the user changes the importance or the priority of the first type alarm item 54a, the controller 160 can change the first type alarm item 54a into the second type alarm item 54b and can display the second type alarm item 54b in the notification region 50. Although the first type message item 51a has the same priority as a previous item, the first type message item 51a can be changed in its position as another item, such as the second type alarm item 54b, is changed in its priority. The item which is changed in the importance or the priority as the time lapses can be a message item, a voice call item, a widget information item, and the like.

The second type voice call item 52b can be an item which is changed in the grid type. As described with reference to FIG. 6, the display unit 140 can display the first type voice call item 52a in the first type grid form if the number of the voice calls in the absence of the user is lower than a predetermined frequency.

If the frequency of the voice calls in the absence of the user is larger than the predetermined frequency, the display unit 140 can display the second type voice call item 52b in the second type grid form. The second type voice call item 52b can be an item including 10 lists of the voice call in the absence of the user.

The display of the second type voice call item 52b can be restricted according to a size of a remaining space in the notification region 50. For example, if the notification region 50 has a small enough size not to display the second type grid, the item of notifying the voice call in the absence of the user can be displayed as the first type voice call item 52a even though it is set to display the item of notifying the voice call in the absence of the user as the second type voice call item 52b. On the other hand, if the frequency of the voice call in the absence of the user is larger than a predetermined frequency, the controller 160 can change the importance or the priority of the notification item in the absence of the user. Furthermore, the controller 160 can change the second type voice call item 52b in the list type similarly to the second type alarm item 54b. The controller 160 can control to change a position of the voice call item, which is changed in the list type, in the notification region 50.

On the other hand, the item display type in the list form can be applied in the case that the amount of information to be displayed is relatively small. To the contrary, if the amount of the information to be displayed is relatively large, the item display type in the grid form can be applied. The item display type in the grid form can be applied when notification information designed to display a text and an image together is generated. Alternatively, when notification information designed to display only a text is generated, the item display type in the list form can be applied.

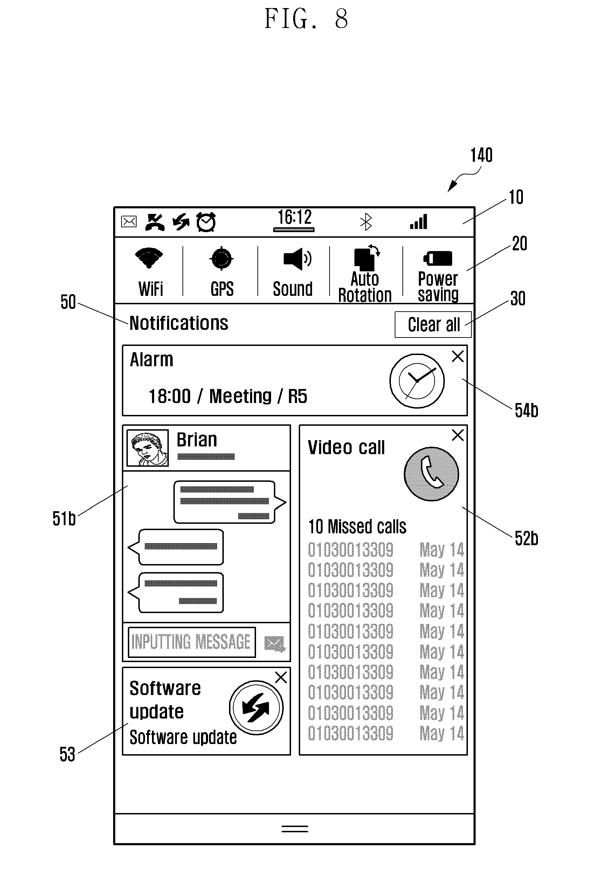

FIG. 8 is an example view illustrating an example of a screen interface of the electronic device according to this disclosure.

Referring to FIG. 8, the display unit 140 can output a notification screen including a short-cut function region 20, an erasing region 30, and a notification region 50. The status bar region 10 can be separately arranged over an upper portion of the notification screen or at the upper portion of the notification screen. The display of the status bar region 10 can be omitted according to the intention of the designer when the notification screen is output. In comparison with FIG. 6, as the short-cut function region 20 and the erasing region 30 are arranged in the identical regions respectively, the description of them will be omitted.

The notification region 50 can include the second type alarm item 54b, the second type message item 51b, the second type voice call item 52b, and the update item 53. The second type alarm item 54b and the second type voice call item, and the update item 53 can be items similar to the items described with reference to FIG. 7.

The second type message item 51b can be another form of the first type message item 51a. The second type message item 51b will be described. The controller 160 can generate an item corresponding to notification information when the notification information is collected according to a reception of the message.

In at least this operation, the controller 160 can generate the first type message item 51a described with reference to FIGS. 6 and 7 according to the priority or the importance of the notification information or the user setting, or the second type message item 51b described with reference to FIG. 8.

Furthermore, the controller 160 can generate the second type message item 51b according to an accumulated amount of the received unidentified messages as shown in the drawings. For example, while generating the first type message item 51a in correspondence to the notification information according to the reception of the message, the controller 160 can generate the second type message item 51b when the accumulated amount of the received messages is larger than a predetermined amount. Furthermore, when the display of the notification screen is requested, the controller 160 can control to output the second type message item 51b to the notification region 50. Alternatively, the controller 160 can control to generate and output the second type message item 51b according to the importance of the received message.

In an embodiment, the importance of the message can be changed according to at least one of identification information of another electronic device transmitting a message, information on a time when the message is received, and information on a position where the message is received. For example, the controller 160 can control to generate and output the second type message item 51b with relation to the corresponding message if the message is received from another electronic device designated by the user. Furthermore, the controller 160 can generate and output the first type message item 51a when the message is received from another electronic device which is not designated by the user. Furthermore, the importance of the message can be changed according to content. The controller 160 can parse the content of the received message and automatically change the importance of the corresponding message if the message includes characters such as "emergency" or "important". The controller 160 can determine the importance of the corresponding message and control to generate and output a message item according to the importance of the message if a predefined character, image or icon indicating the importance is detected.

When a plurality of messages is received, the controller 160 can control to generate and output the second type message item 51b by reference of a message among the plurality of the messages, which has a high importance. Alternatively, the controller 160 can control to generate and output the first type message item 51a and the second type message item 51b according to each message. In an embodiment, the first type message item 51a can be duplicated. That is, the plurality of messages to be displayed as the first message item 51a can be displayed as one of the first type message item 51a.

Furthermore, a plural number of the second type message items 51b can be displayed. For example, if the message with a relatively higher importance is received from two electronic devices, the display unit 140 can output two second type message items 51b. The plurality of the second type message items 51b also can be displayed just as one second type message item due to a size of a remaining space in the notification region or the user setting.

The second type message item 51b can be constituted in the form of a mini application screen including a predetermined part of the content of the message which is previously received, as shown in FIG. 8. The controller 160 can constitute the second type message item 51b of a predetermined image or reconstruct the second type message item 51b by removing or reducing a part of an application activation screen in order to reduce a screen for activating a message application.

The controller 160 can control to write and transmit a message on the notification screen by using the second type message item 51b in the form of the mini application screen. For example, when the user touches a character input region arranged at a lower portion of the mini application screen, the controller 160 can control to make and output a virtual input key map for inputting characters overlapped the notification screen. Then, the user can write a message on the notification screen by using the virtual input key map. The controller 160 can control to transmit the written message based on a corresponding message application. In an embodiment, the mini application screen can be a screen for any one application of various applications such as a chatting message application, an SMS application, Twitter and the like.

On the other hand, the controller 160 can change the first type message item 51a into the second type message item 51b when a specific event occurs in the state that the first type message item 51a is displayed. For example, if a predetermined event including a hovering event, an eye-tracking event, a long press event, a touch and swipe event and the like occurs, the controller 160 can change the first type message item 51a into the second type message item 51b. For example, when the long press touch event occurs on the notification region 50 in which the first type message item 51a is displayed, the second type message item 51b can be substituted for the first type message item 51a and may be output in the region where the first type message item 51a is displayed. As another example, when a touch and swipe operation, in which the user touches and swipes the notification region 50 in which the first type message item 51a is displayed, occurs, the controller 160 can remove the first type message item 51a from the display unit 150 while outputting the second type message item 51b. Thus, although the user may not perform a separate screen conversion, the user can use a message function on the notification screen immediately. An item display type changing function according to the occurrence of the event can be applied to a voice call item and an alarm item as well as a message item.

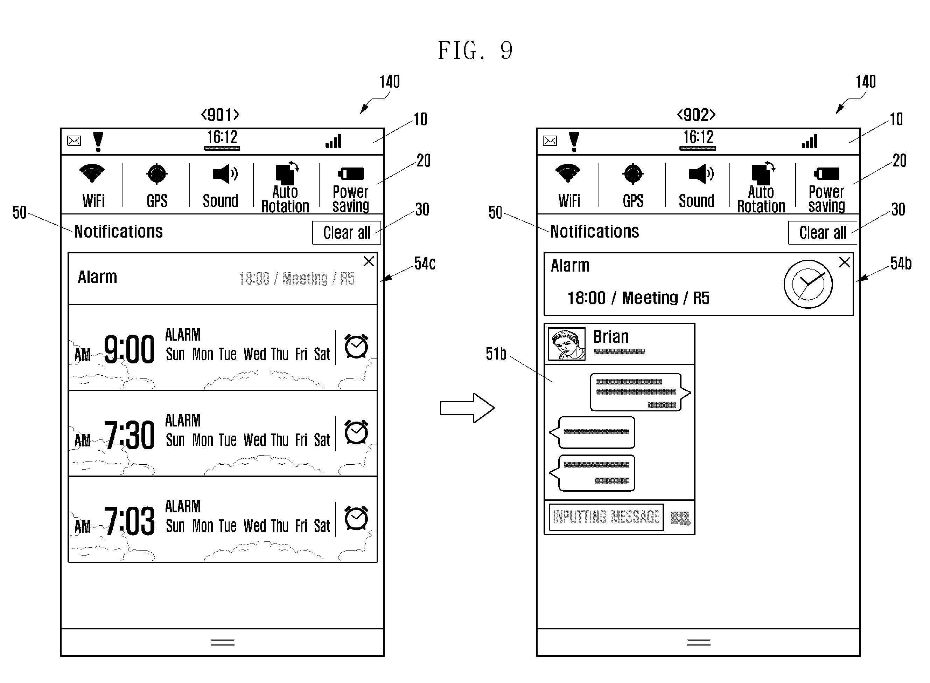

FIG. 9 is an example view illustrating an example of a screen interface of the electronic device according to this disclosure.

Referring to FIG. 9, the display unit 140 can output the notification screen according to an occurrence of the predetermined event. The display unit 140 can include the status bar region 10, the short-cut function region 20, the erasing region 30, and the notification region 50. Here, the status bar region 10, the short-cut function region 20, and the erasing region 30 can be regions identical to the regions described with reference to the drawings, and the descriptions thereof will be omitted.

Referring to a screen 901, the notification region 50 can include a third type alarm item 54c. The third type alarm item 54c can include three alarm items as shown in FIG. 9. Here, the third type alarm item 54c described in the embodiment of the present disclosure may not be limited to the three alarm items. That is, if there is a large number of alarm settings, for example, five alarm items are set, the third type alarm item 54c displayed in the notification region 50 can include five alarm items. Further, if two alarm items are set, the third type alarm item 54c can be displayed in the notification region 50 in the form of including two alarm items. If there are many more alarm items than a predetermined number, the controller 160 can control to resize and output the alarm items.

Further, if there are more alarm items than the predetermined number, the controller 160 can output only some of the alarm items and allow the user to search for the remaining items by a scroll. For at least this purpose, a scroll bar can be output on a side of the notification screen. The alarm items can include virtual buttons for cancelling an alarm, respectively.

In the case that only some items of the plural items must be displayed in the notification region 50, the controller 160 can control to identify the priority or the importance of the items and to display the items having a relatively higher priority. The alarm item shown in the screen 901 can be a schedule item. As shown in the screen 901, the electronic device 100 can differently provide an amount of the output notification information according to a remaining space of the notification region 50 when a specific notification item is displayed.

When another piece of notification information is generated and a notification item to be output is added in the notification region 50 in the state of the screen 901, the controller 160 can control to change the third type alarm item 54c into the second type alarm item 54b as shown in the screen 903. Then, the controller 160 can arrange the newly added item in the notification region 50. In the screen 903, the arrangement of the second type message item 51b according to the reception of the message is illustrated.

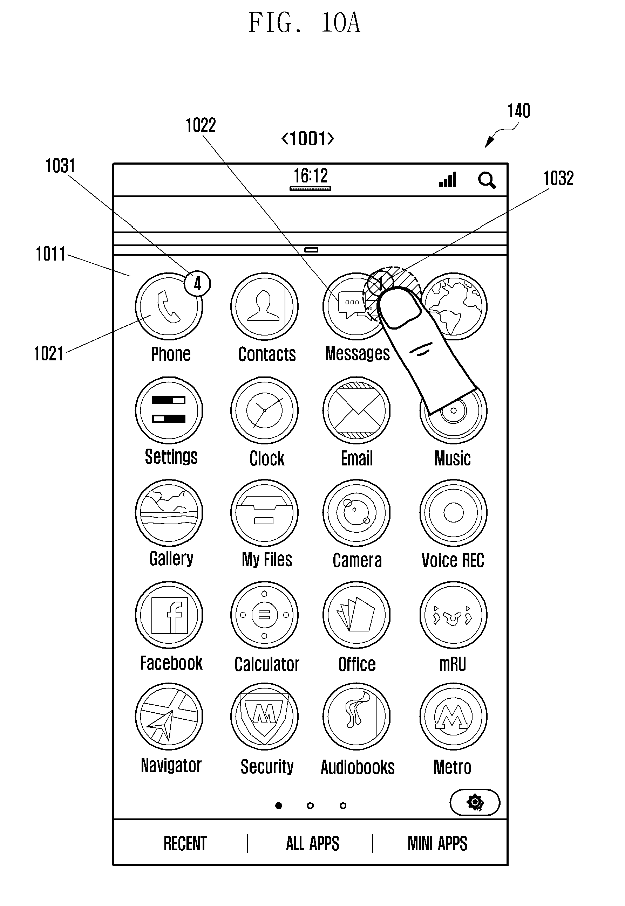

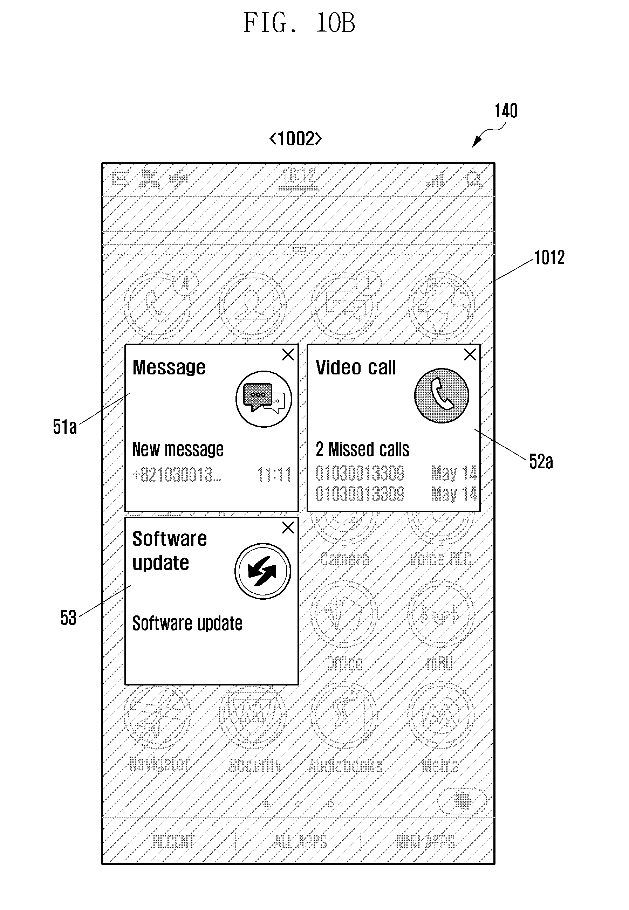

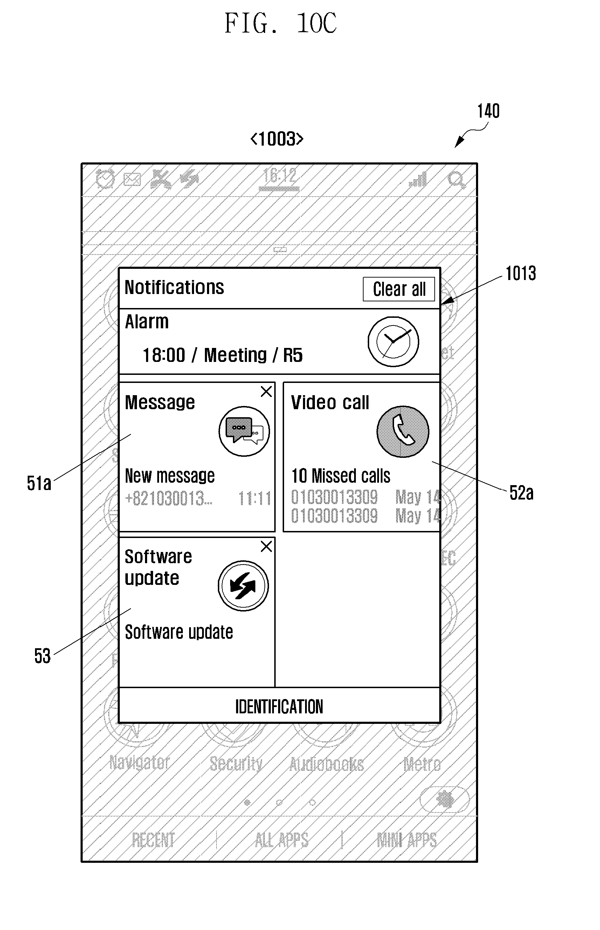

FIGS. 10A-10C are example views illustrating examples of screen interface of the electronic device according to this disclosure.

Referring to FIGS. 10A-10C, the display unit 140 can output an icon screen 1011 in which at least one icon is arranged. At this time, the display unit 140 can output a call icon for calling the notification screen or a notification screen calling badge to a side of the screen. For example, the display unit 140 can arrange the notification screen calling badges 1031 and 1032 in a region adjacent to a region in which specific icons are arranged or a region which partially overlaps specific icons.

Referring to a screen 1001, the display unit 140 can output the first badge 1031 so that the first badge partially overlaps a voice call icon 1021. Further, the display unit 140 can output the second badge 1032 so that the second badge partially overlaps a message icon 1022. When at least one of the first badge 103 and the second badge 1032 is selected, the controller 160 can control to constitute and output a first notification screen 1012 as shown in any one of the screens 1002 and 1003.

More particularly, when the second badge 1032 is selected, the controller 160 can output and make the first notification screen 1012 constituted of only notification items as shown in the screen 1002 overlay the current icon screen 1011. The first notification screen 1012 overlaying the icon screen 1011 can include only a first type message item 51a, a first type voice call item 52a, and an update item 53. The first notification screen 1012 shown in the screen 1002 can be a screen in which notification items are arranged in the display form of the grid type. The controller 160 can control to constitute the first notification screen 1012 of the items to which a predetermined display type is applied when an output of the notification screen is requested by selecting the notification screen call badge.

The controller 160 can differently constitute the first notification screen 1012 according to an icon in which the notification screen calling badge is arranged. For example, the controller 160 can control to output the first type message item 51a to a left upper portion of the screen 1002 when the first badge 1031 arranged on the message icon 1022 is selected. Further, the controller 160 can control to additionally output items related to the first type message item 51a, for example, items related to a communication function. The controller 160 can control to output only the first type message item 51a when the first badge 1031 on the message icon 1022 is selected. With reference to at least the screen 1002, the controller 160 can control to output the first notification screen, which includes the first type message item 51a except for the first type voice call item 52a and the update item 53, on the icon screen 1011.

In an embodiment, when the second badge 1032 arranged in the voice call icon 1021 is selected, the first type voice call item 52a can be arranged at the left upper portion of the first notification screen 1012. Alternatively, the first notification screen can be constituted of only the first type voice call item 52a. In an embodiment, the controller 160 can constitute the notification screen according to the importance of the notification items regardless of a sort of an icon in which the first or second badge 1031 or 1032 is arranged. For example, the controller 160 can constitute the notification screen of only the notification item having the highest priority among the items to be output through the notification screen. Alternatively, the controller 160 can constitute the notification screen of the notification items having a higher priority than a predetermined priority. In an embodiment, the controller 160 can constitute the notification screen including only the alarm item.

The second notification screen 1013 shown in the screen 1003 can be displayed by reducing the notification screen shown in the previous drawings. The second notification screen 1013 can include only content related to the notification item. The second notification screen 1013 can include only the notification region. Additionally, the second notification screen 1013 can be provided with an virtual button for removing a corresponding screen, for example, a button of "identification". As shown in the drawings, the second notification screen 1013 can include the second alarm item 54b having a reduced size, the first type message item 51a having a reduced size, the first type message item 51a having a reduced size, and the update item 53 having a reduced size.

On the other hand, in order to prevent a duplication of a badge selection event and a conventional input event, the electronic device 100 can define a specific input event, for example, a long press touch event being continued for a predetermined time. Thus, when the long press touch event for selecting the badge occurs, the controller 160 can recognize a corresponding touch event as a notification screen call as shown in the screen 1002 or 1003. Alternatively, when a plurality of touch points occurs or a drag based on the plurality of touch points occurs, the controller 160 can recognize a corresponding touch event as a notification screen call as shown in the screen 1002 or 1003. Further, the controller 160 can recognize an input event of touching the status bar region as a notification screen call as shown in the screen 1002 or 1003.

The first badge 1031 and the second badge 1032 can include information on the number of pieces of the notification information or the number of the notification items which are generated in correspondence to a corresponding icon.

On the other hand, a method of calling the notification screen can include a touch event, a specific gesture event, and a hardware key event in the status bar region in the drawings as well as a selection of a badge shown in FIGS. 10A-10C. Further, the method of calling the notification screen can be performed by a collection of a hovering event occurring in a specific position, for example, the status bar region or a region adjacent to the status bar region, a collection of an event of watching a specific position of the display unit 140 according to an operation of an eye tracking function, a collection of a voice instruction for a call based on a voice recognition, and the like. Here, the electronic device 100 can further include an electronic magnetic induction type electronic pen and a pen panel for recognition of the electronic pen in order to support the collection of the hovering event. The hovering event can be an event for a touch object which occurs on an electrostatic capacitance type touch panel without use of a separate electronic pen and the pen panel.

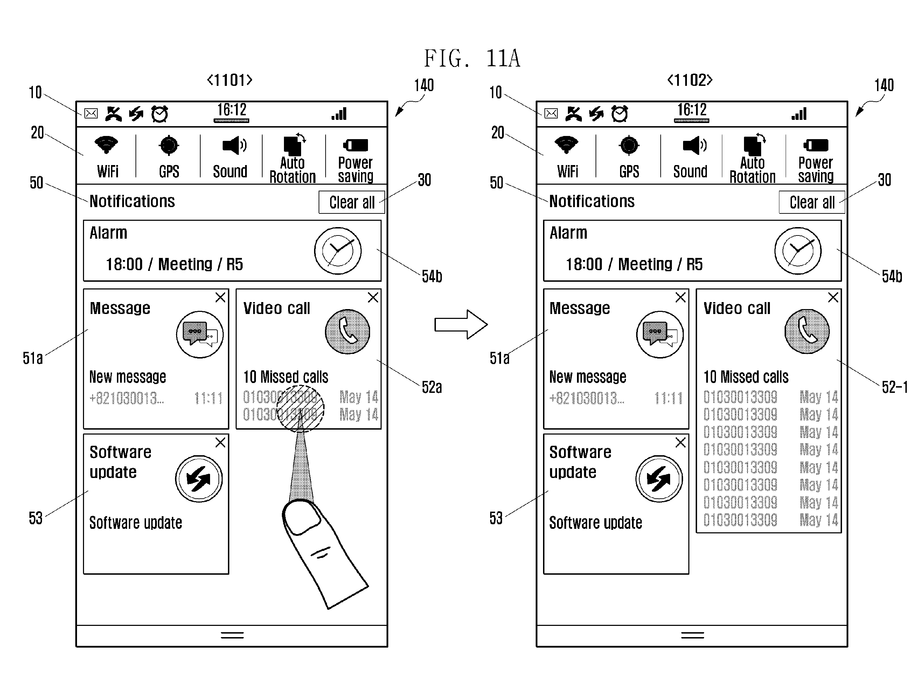

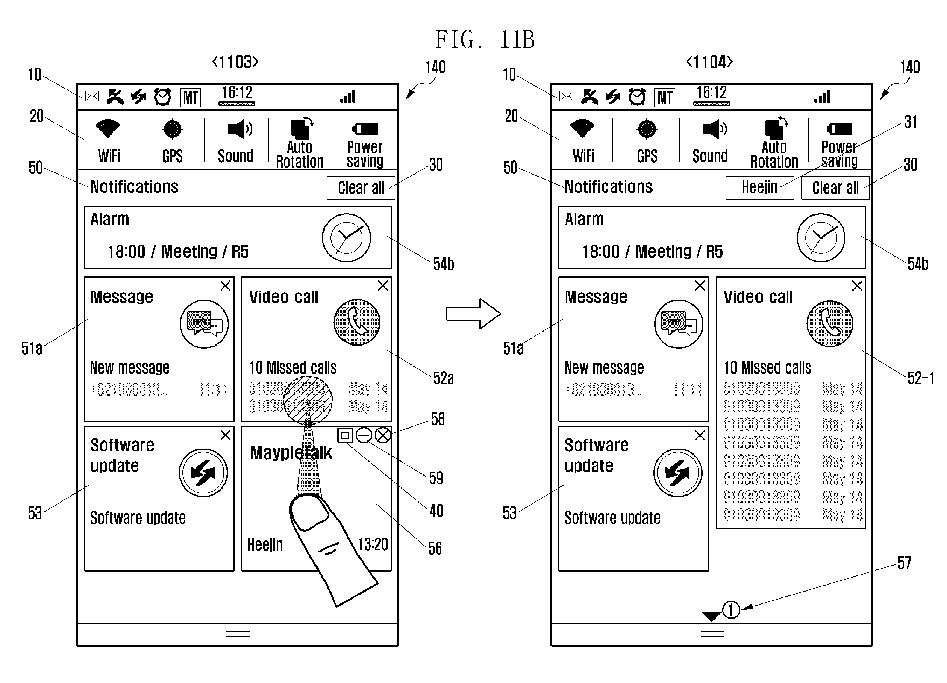

FIGS. 11A and 11B are example views illustrating an example of a screen interface of the electronic device according to this disclosure.

Referring to FIG. 11A, the display unit 140 can output the notification screen. The notification screen can include the second type alarm item 54b, the first type message item 51a, the first type voice call item 52b, and the update item 53. The second type alarm item 54b, the first type message item 51a, and the update item 53 can be items identical to the items described with reference to the drawings.

On the other hand, the first type voice call item 52a shown in a screen 1101 can be displayed in the grid type in a region adjacent to the first type message item 51a according to an occurred time, the amount of notification information, or a priority. The display manner or display type of the first type voice call item 52a can be the grid type identical to the display type of the first type message item 51a.

On the other hand, an event for changing a display form of the first type voice call item 52a can occur. For example, the user can perform an operation of touching a desired region of the first type voice call item 52a and then dragging the touch in a desired direction. The controller 160 can recognize the change of the display form of the first type voice call item 52a as an event when a predetermined event occurs. Further, the controller 160 can change the first type voice call item 52a to a changed voice call item 52-1 as shown in a screen 1102. The changed voice call item 52-1 can be the grid type having a relatively wider region compared with the first type voice call item 52a. The changed voice call item 52-1 can display more notification information in a broadened region.

It is described that the first type voice call item 52a can be changed into the changed voice call item 52-1 capable of displaying a list of eight missed calls. However, the embodiment of the present disclosure is not limited thereto. That is, the first type voice call item 52a can be changed into a grid type item capable of displaying a list of five missed calls according to the number of the events having occurred and a size and a sort of content included in the event. The controller 160 can automatically control an adjustment of a size and a sort of a specific display type item according to the amount or the number, the size and the sort of the contents included in the notification information corresponding to the first type voice call item 52a. For example, the controller 160 can define a specific size and a specific type item for the notification information. Further, the controller 160 can automatically control an enlargement or reduction of a size of an item defined according to the amount, the number or the size of the contents included in the occurred notification information, and also can automatically control a sort of the display type of the item.

In an embodiment, the electronic device 100 can support that the user manually changes the size of the item and the sort of the display type.

On the other hand, it is shown that the changed voice call item 52-1 can be enlarged in a remaining space at a lower portion of the notification region 50 when the changed voice call item 52-1 of the first type voice call item 52a is adjusted. In an embodiment, if a change is requested in the state that other items are disposed in the lower region of the first type voice call item 52a, the controller 160 can adjust a position and a size of the other items according to the display of the changed voice call item 52-1. Alternatively, the controller 160 can remove an item having a relatively lower priority from the notification screen. When hidden items are created in the notification screen according to the generation of the changed voice call item 52-1, the controller 160 can control to output a scroll bar for searching for the hidden items on a side of the notification screen. In an embodiment, the controller 160 can support a scroll function of the notification screen without an output of a separate scroll bar so as to support a search for an item which is not displayed in the notification region 50.

FIG. 11B shows a change of the screen according to an occurrence of the changed voice call item 52-1. When an event for changing the form of the first type voice call item 52a shown in the screen 1103 occurs, the controller 160 can adjust the first type voice call item 52a in the changed voice call item 52-1, as shown in the screen 1104. In the process, an SNS item 56 arranged below the first type voice call item 52a can be removed or disappear from the notification region 50. The controller 160 can provide a virtual button 57 for searching for the disappeared SNS item 56, as shown in the screen 1104. The virtual button 57 for the search can be provided on a right side of the notification region 50 in the form of the scroll. The virtual button 57 can provide information on the number of the items which are not displayed in the notification region 50. A number "1" displayed along with the virtual button 57 for the search can be the number of the items which are not displayed in the notification region 50. Accordingly, if the plurality of items is not displayed in the notification region 50, a numerical value corresponding to the items can be displayed on the virtual button 57 for the search. If the virtual button 57 for the search is pushed and the screen is scrolled, a page conversion of the notification screen can be performed and at least some of the items which are not displayed may be displayed.

As shown in FIG. 11B, the SNS item 56 corresponding to the specific notification information, for example, the SNS item 56 corresponding to the notification information occurring based on the SNS service can include an virtual button 59 for a minimization and an virtual button 58 for a cancelation. The virtual button 59 for the minimization, the virtual button 58 for the cancelation and a virtual button 40 for hiding in the SNS item 56 are exemplarily shown, and the buttons can be identically applied to other items. When the virtual button 59 for the minimization of the SNS item is pushed, the SNS item 56 can disappear from the notification region 50. As shown in the screen 1104, the SNS item can be output as a minimized item 31 at a specific position, for example, in a region adjacent to the erasing region 30 of the notification screen. When the virtual button 58 is pushed, the SNS item 56 can be removed from the notification region 50.

On the other hand, the electronic device 100 can provide a function of hiding at least one notification item. For at least this purpose, the electronic device 100 can control to output the virtual button 40 for the hiding to the specific display type. When the virtual button 40 for the hiding is selected, the electronic device can control to hide the corresponding notification item in the notification screen. Such a notification item set to be hidden can be displayed on the notification screen through a selection of a separate view item. Alternatively, when a predetermined gesture event occurs, the notification item set to be hidden can be provided to the notification screen again. When the notification information corresponding to the notification item set to be hidden occurs again, the notification item corresponding to the corresponding notification information can be not provided basically and a hiding function can be applied to the notification item. Furthermore, the electronic device 100 can change the numerical value of the virtual button 57 for the search in order to notify of the reception of the notification item set to be hidden. The user can recognize the presence of the notification item for the hiding if there is a difference between the number of the notification items displayed on the entire notification screen and a numeric of the virtual button 57 for the search. Then, the user can generate a specific gesture event or a specific menu item in order to identify the notification item for the hiding. The controller 160 can control to release a setting of the hiding and to output the corresponding item on the notification screen when such an event occurs.

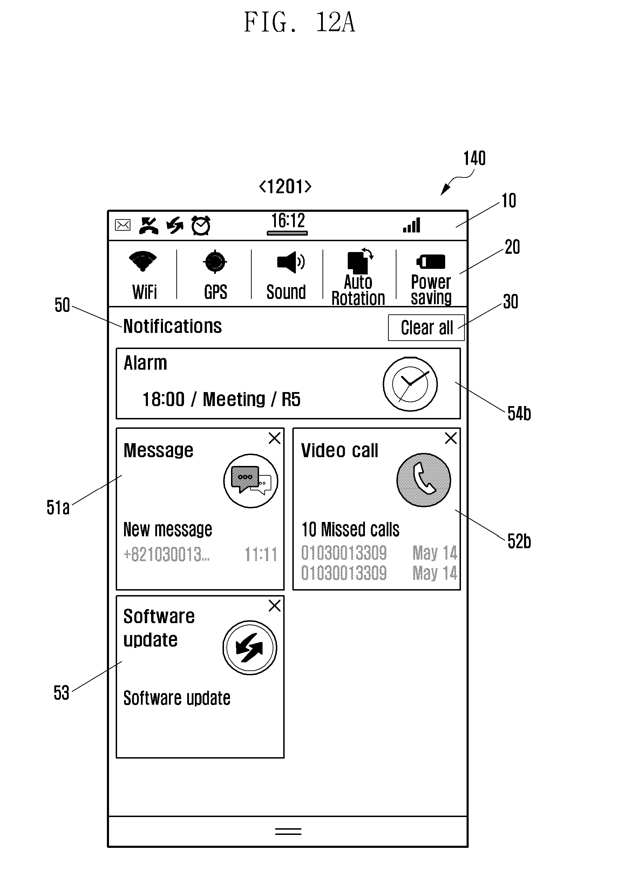

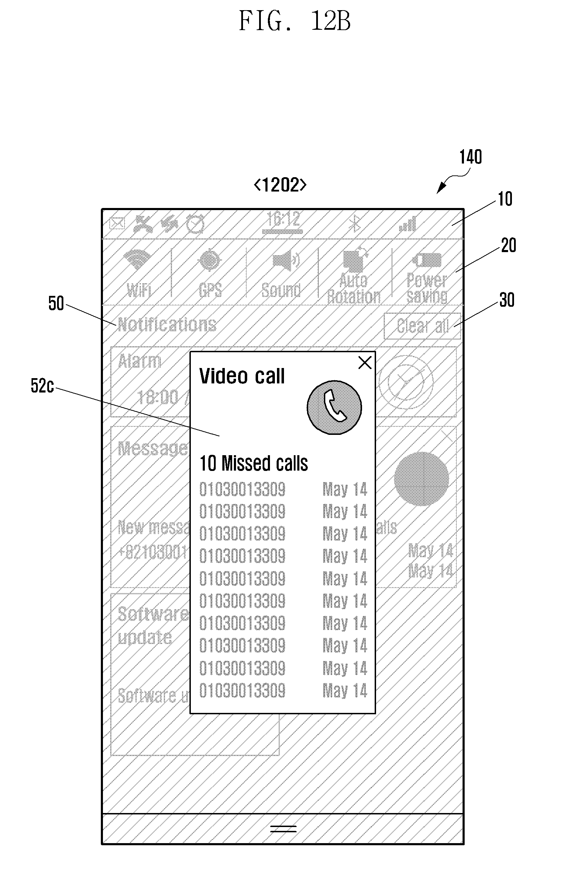

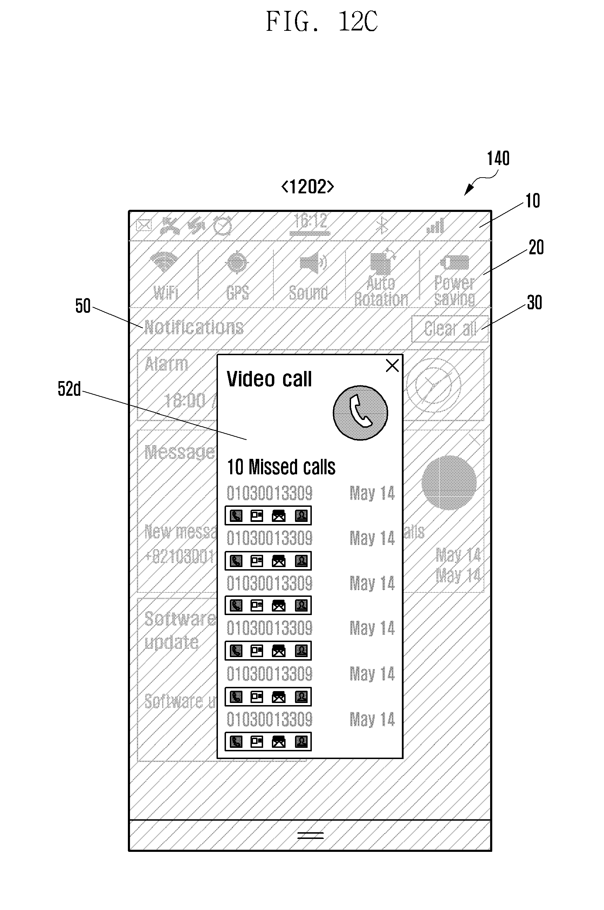

FIGS. 12A-12C are example views illustrating an example of a screen interface of the electronic device according to this disclosure.

Referring to FIGS. 12A-12C, in the state that the notification screen is output to the display unit 140 as shown in the screen 1201, the controller 160 can receive an input event for changing a display of the first type voice call item 52a. For example, the controller 160 can collect a touch event of a long press on a region in which the first type voice call item 52a is displayed. Accordingly, the controller 160 can change a display scheme or a display type of the first type voice call item 52a as shown in the screen 1202 or 1203.

For example, the controller 160 can output a third type voice call item 52c on the notification screen as shown in the screen 1202. The third type voice call item 52c can be output on a separate layer distinguished from the notification screen. The third type voice call item 52c can have a region in which a list of all missed calls included in the notification information or a relatively large number of items are displayed. The third type voice call item 52c can include a virtual button capable of cancelling the corresponding output state.

When an event for changing the item display type occurs, the controller 160 can output a fourth type voice call item 52d on the notification screen as shown in the screen 1203. The fourth type voice call item 52d can be output to a separate layer overlaid on the notification screen similarly to the third type voice call item 52c. The fourth type voice call item 52d can include at least a piece of information included in the notification information and can include functional items to be performed by using the corresponding information. The fourth type voice call item 52d can include an item of receiving a predetermined number of missed calls, a voice call related to a functional item, which is performed based on each item, for example, an item of connecting a voice call, an item of sending a message, an item of sending a chat message, and the like. Thus, the user can immediately send a message to an electronic device on a list of the missed calls or try to connect a voice call by using the items included in the fourth type voice call item 52d.

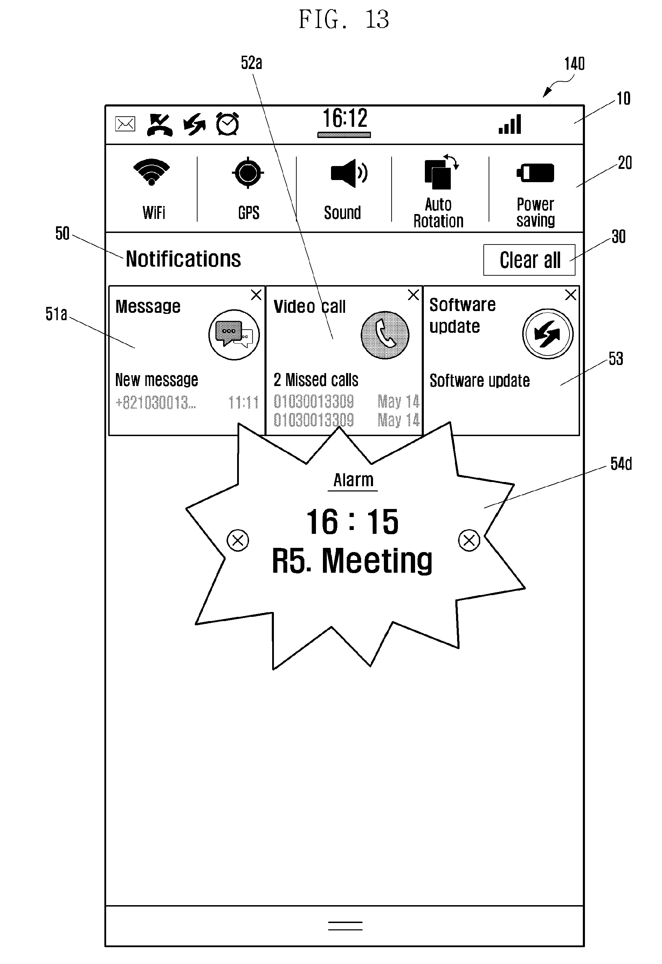

FIG. 13 is an example view illustrating an example of a screen interface of the electronic device according to this disclosure.

Referring to FIG. 13, the display unit 140 can output the notification screen according to an occurrence of the specific event. The notification screen can include at least one generated notification item and an empty region in which the notification item is absent. FIG. 13 shows the notification screen including four notification items.

More particularly, the notification screen can include a first type message item 51a, a first type voice call item 52a, an update item 53, and a first type alarm item 54a. In an embodiment, the first type message item 51a, the first type voice call item 52a, and the update item 53 can be arranged in the grid type, and pluralities of the first type message items 51a, the first type voice call items 52a, and the update items 53 can be arranged in longitudinal and transverse directions, respectively, as shown in FIG. 13. The first type message item 51a, the first type voice call item 52a and the update item 53 can be adjusted according to the size of the display unit 140.

The fourth type alarm item 54d can have a desired surface of which an appearance is formed in a free curved line. The fourth type alarm item 54d can be a free arrangement type and can be randomly arranged in a predetermined region of the alarm screen. For example, the fourth type alarm item 54d can be arranged so that a part of the fourth type alarm item 54d overlaps other items. The fourth type alarm item 54d can be output in the form of overlaying a whole screen including the short-cut function region 20 and the erasing region 30, or in the notification region 50. Alternatively, in a display scheme in which the notification screen gradually comes down in an opposite direction from the status bar region 10 according to a calling of the notification screen, when the notification screen is arranged on the display unit 140, the fourth type alarm item 54d can be output in the form of a pop-up. At this time, the fourth type alarm item 54d can be output in a flicker display manner in which a display and a removal of the pop-up are repeated. The fourth type alarm item 54d can maintain a state of displaying the pop-up after the flicker display.

The fourth alarm item 54d can be adjusted to have a relatively higher recognition in comparison with other items when it is displayed to be overlapping the other items. For at least this purpose, the controller 160 can make transparencies of a first type message item 51a, a first type voice call item 52a, and an update item 53 be relatively higher, and opacity of the fourth type alarm item 54d be relatively higher. Alternatively, the controller 160 can control only the transparencies of the region of the first type message item 51a, the first type voice call item 52a, and the update item 53 overlapping the fourth type alarm item 54d. In an embodiment, the fourth type alarm item 54d can have a relatively higher importance or priority, compared with the other items. The fourth type alarm item 54d can be displayed to have a larger size than a predetermined size and a plurality of the virtual cancelation buttons for removing the fourth type alarm item 54d can be arranged.

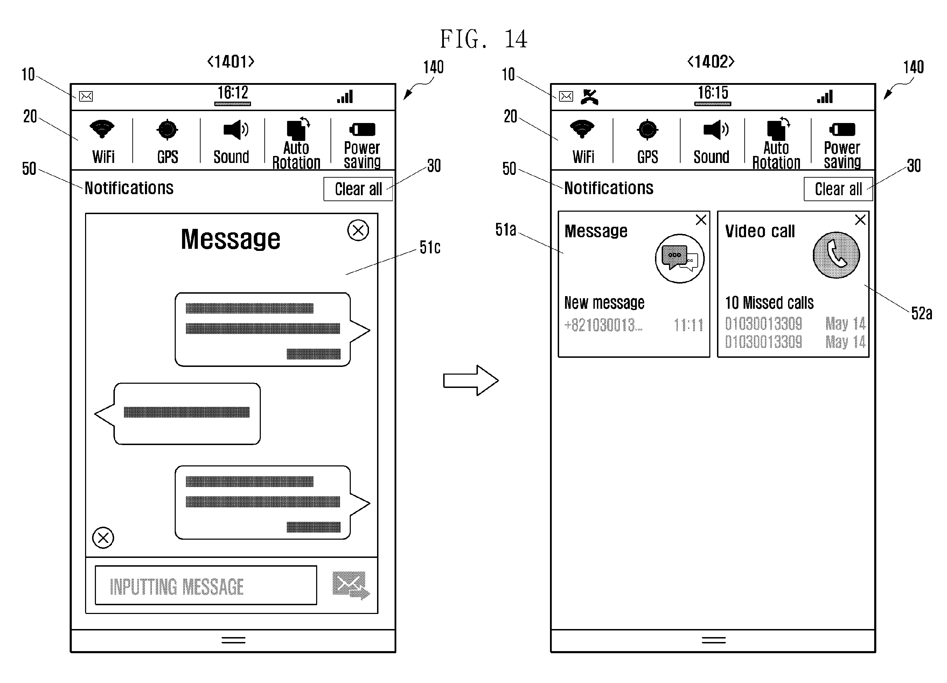

FIG. 14 is an example view illustrating an example of a screen interface of the electronic device according to this disclosure.

Referring to FIG. 14, the controller 160 can control to output the notification screen on the display unit 140 as shown in a screen 1401 when an event for calling the notification screen occurs. In the case that one item is output on the notification screen, the controller 160 can control to adjust a size of the corresponding item adapted to the size of the notification region 50, and then to output the corresponding item. For example, the controller 160 can generate the third type message item 51c having a size corresponding to the whole notification region 50 in a process of outputting the notification item according to a reception of the message. Further, when the notification screen is called, the controller 160 can control to output the third type message item 51c to the notification region 50. Thus, the display unit 140 can output the notification region 50 in which only the status bar region 10, the short-cut function region 20, the erasing region 30, and the third type notification region 51c are displayed.

The third type message item 51c can correspond to a mini application screen similar to the second type message item described above. At least one virtual cancelation button for removing the third type message item 51c from the notification region 50 can be arranged. In the drawings, it is shown that a plurality of virtual cancelation buttons is arranged for the convenience of a removal. The number and position of the virtual cancelation buttons can be adjusted according to a change of a user setting and a change by a designer.

On the other hand, it is described that the electronic device 100 can have the notification screen including the short-cut function region 20. However, the short-cut region 20 can be removed from the notification screen according to a control of the user setting. Therefore, the notification screen can be displayed on a whole region of the display unit 140 or on a whole region of the display unit 140 except for the status bar region 10. As the result, the third type message item 51c can be displayed throughout the display unit 140. Thus, the third type message item 51c can include a relatively large amount of information compared with the other types of the message items. When an input event for requesting for writing a message using the third type message item 51c occurs, the controller 160 can control to output an virtual input window for an input of characters on the notification region 50. When the input of the characters is completed, the controller 160 can control to transmit the input characters to another electronic device related to the corresponding message item without a conversion of the screen. After the completion of the transmission, a pop-up window indicating the completion of the message transmission can be output.

On the other hand, an additional notification item display can be required according to an occurrence of additional notification information. For example, a reception of a voice call in the absence of the user can occur. Accordingly, the controller 160 can change the third type message item 51c into the first type message item 51a. The controller 160 can control to output the first type message item 51a and the first type voice call item 52a according to the reception of the voice call in the absence of the user, as shown in the screen 1402.

In an embodiment, the controller 160 can control to remove the first type voice call item 52a from the notification region 50 when an event for a removal of the first type voice call item 52a occurs. Furthermore, the controller 160 can control to output the notification screen, to which a scheme of displaying the third type message item 51 is applied, to the display unit 140 as shown in the screen 1401. Alternatively, when an event for a removal of the first type message item 51a occurs, the controller 160 can change the first type voice call item 52a to the form of being displayed in the whole notification region 50 similarly to the scheme of displaying the third type message item 51c. Furthermore, the controller 160 can control to output the changed voice call item on the whole notification region 50. In an operation, the controller 160 can control to enlarge and output the first type voice call item 52a to be adapted to the size of the notification region 50. Furthermore, the controller 160 can control to output a larger amount of information than the notification information included in the first type voice call item 52a through the changed voice call item.

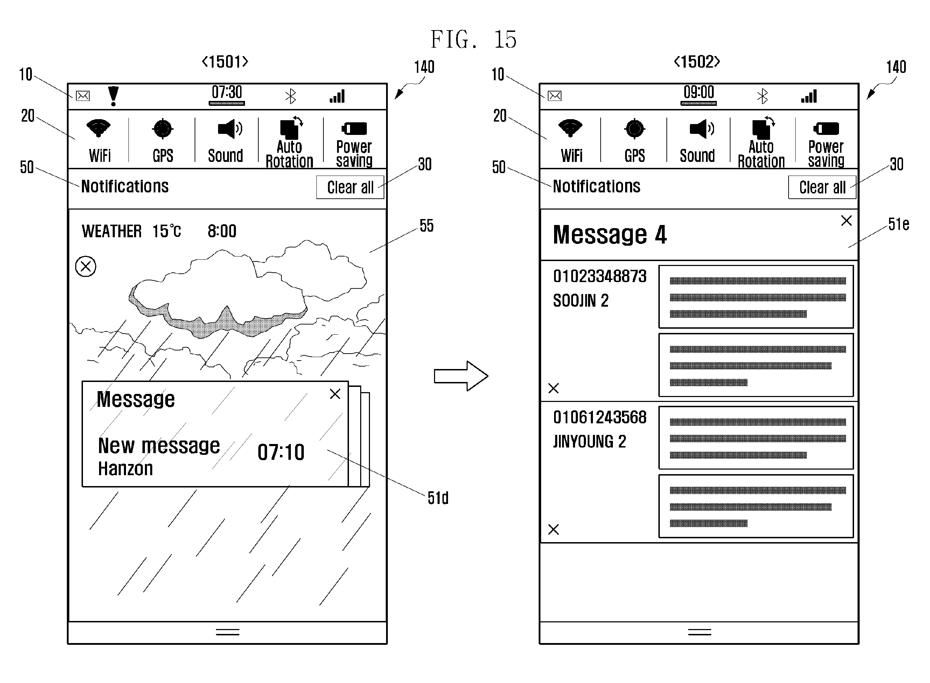

FIG. 15 is an example view illustrating an example of a screen interface of the electronic device according to this disclosure.

For example, the controller 160 can collect the notification information related to the reception of the message and the notification information related to the weather widget. Then, the controller 160 can generate a weather item corresponding to the notification information of a weather widget and a message item corresponding to the message reception notification information. At this time, the controller 160 can generate a weather item to be provided to a background screen of the notification region 50 with respect to the weather information. Furthermore, the controller 160 can generate the fourth type message item in the list type in correspondence to the message reception notification information.

When a call for a notification screen is requested, the controller 160 can control to display the weather item 55 on the background screen of the notification region 50 as shown in a screen 1501. Furthermore, the controller 160 can control to output the fourth type message item 51d on the region in which the weather item is displayed as the background screen.

The weather item 55 can be displayed on the background screen of the notification region 50. At this time, the weather item can be provided to the background screen of the short-cut function region 20. On the other hand, although it is shown in the drawings that the short-cut function region is arranged, the short-cut function region 20 can be removed. In this case, the notification region 50 can include the short-cut function region 20, and thus, the display region of the weather item 55 can be enlarged. The weather item 55 can include text information and image information related to the weather. The text information can include a simple image indicating a temperature, a time when the weather is forecasted, and the weather. The image information can be displayed as the background screen. The image information can be a stationary image or a moving picture. The image information can be displayed with a relative transparency in order for the user to recognize at least one items displayed over the image information. At least one virtual removal button can be provided in the weather item 55. When the virtual removal button is selected, the weather item 55 can be removed. In at least this case, the weather item 55 provided as the background screen can be removed and the predetermined background screen or the specific background color can be provided.

The weather item can be changed according to the time and location. Accordingly, a display time of the weather item 55 can be set. For example, when weather forecast information is collected at a designated time, the weather item 55 can be output as the background screen on the display unit 140 for a time which the user designates or which is designated as a default. The weather item 55 can be displayed for at least a desired time of a desired time in the past and a desired time in the future by reference of a designated time. For example, the weather item 55 can be output as the background screen of the notification region 50 or the background screen of the notification screen for thirty minutes starting at 7:30 a.m.. When a desired time lapses, the weather item 55 can be removed or updated by newly collected forecast information and then can be provided as a background screen to the notification region 50. Furthermore, if the electronic device 100 is located at a position where the weather is changed, the controller 160 can collect the weather information and provide the weather information as the background screen to the notification region 50. For at least this purpose, the electronic device 100 can include a module for collecting location information. Furthermore, when the location information of the electronic device is collected by a predetermined period or the location of the electronic device is changed by a predetermined distance from a base station, the electronic device can collect the weather information at a corresponding position.

On the other hand, in the above description, an item to be provided as the background screen of the notification region 50 can be changed according to the user setting. For example, advertising information can be provided as the background screen to the notification region 50. Security information can be provided as the background screen to the notification region 50. Information on a service time of a subway or bus can be provided as the background screen to the notification region 50. At least a part of a text and an image in a message content of a received SNS, SMS, MMS, E-mail, and the like can be provided as the background screen of the notification region 50.

The fourth type message item 51d can be arranged in a transverse direction by reference of the drawings. Especially, the fourth type message item 51d can be the list type in which other items cannot be arranged in the transverse direction. The fourth type message item 51d can include a virtual removal button.

When an virtual removal button for a removal of the weather item 55 is selected or a time for displaying the weather item 55 lapses, the display unit 140 can output a fifth type message item 51e to the notification region 50 as shown in the screen 1502. The fifth type message item 51e can be another display type of the message item. The electronic device 100 can provide a setting screen in order to change a display type of the message item. The controller 160 can utilize all the remaining space of the notification region 50 so that the user identifies information relating to the message in more detail. The user can easily identify how many messages have not been identified and how many messages a specific user has sent, through the notification region 50. For the purpose, the controller 160 can classify and provide received messages according to each user. When an identical user sends a plurality of messages, the controller 160 can control to provide the plurality of messages on a mini application screen or to display the plurality of messages in the list form, as described above.

As described above, the operation of the notification function can support that the user can understand a meaning of the notification item more easily and intuitively by diversifying a display manner or a display type according to a property of notification information generated by the electronic device 100. Furthermore, the present disclosure can control to change contents of the notification information fluidly according to various environments of the electronic device 100. The present disclosure can support that the user quickly accesses and understands a variety of information that the user desires, through the notification screen although a complicated process in the electronic device may not be carried out. The present disclosure can change the display form of the notification screen according to the user setting so as to support that the user accesses information specialized to the user.

On the other hand, in the above description, although it is illustrated that a specific display type is applied to a specific sort of notification item, the present disclosure may not be limited thereto. For example, the notification item of the mini application screen can be usefully applied to various applications such as a schedule application or a communication application as well as a message application.

On the other hand, the above-mentioned electronic device 100 can further include various and additional modules according to their type. That is, the electronic device can further include configurations such as a short-range communication module for short-range communication, an interface for a transmission and reception of data by a wired communication scheme or a wireless communication scheme of the electronic device, an Internet communication module for communication with the Internet network to perform the Internet function, a digital broadcasting module for receiving and reproducing digital broadcasting, and the like. Although all such elements may not be enumerated since modifications thereof can be diversely made according to a convergence trend of digital devices, elements equivalent to the aforementioned elements may be further included in the devices. Furthermore, in the electronic device, specific structural elements can be excluded from the above-mentioned configuration or substituted with other structural elements according to their type. This will be easily understood by those skilled in the art to which the present disclosure pertains.

In addition, the electronic device 100 can include all information and communication devices and multimedia devices such as a Portable Multimedia Player (PMP), a digital broadcasting player, a Personal Digital Assistant (PDA), a music player (for example, an MP3 player), a portable game terminal, a smart phone, a laptop computer, and a handheld PC and application devices thereof as well as all mobile communication terminals operating based on communication protocols corresponding to various communication systems.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method of operating a function of a notification in an electronic device, the method comprising:
receiving a specific input event; and
displaying notification information generated in the electronic device according to a reception of the specific input event as a notification item in any one display type of a plurality of display types.

2. The method as claimed in claim 1, further comprising:
analyzing at least one of a property of the notification information and a user setting;
generating the notification item according to a predefined display type corresponding to an analysis result; and
storing the generated notification item.

3. The method as claimed in claim 1, wherein the displaying of the notification information comprises:
analyzing at least one of a user setting and a property of the notification information stored according to the reception of the specific input event;
generating the notification item according to a predefined display type corresponding to an analysis result; and
constituting a notification screen comprising the notification item in real time.

4. The method as claimed in claim 1, wherein the displaying of the notification information comprises:
identifying at least one of an amount of the notification information, a sort of an application providing the notification information, a priority or importance of the notification item, a time when the notification information is generated, a position where the notification information is generated, a number of pieces of the notification information, a number of the notification items, a size of a notification screen on which the notification item is displayed, a type and an amount of contents of notification information included in the notification item, and a sort of an application executed at a time point when the notification information is generated; and
determining display types of the notification items according to the identification.

5. The method as claimed in claim 1, wherein the displaying of the notification information comprises at least one of:
displaying a specific notification item in a grid type in which a plurality of the notification items are arranged in longitudinal and transverse directions according to a property of the notification information;
displaying the specific notification item in a list type in which one notification item is arranged in a longitudinal or transverse direction and a plurality of the notification items is arranged in a transverse or longitudinal direction according to the property of the notification information; and
displaying the specific notification item in a free arrangement type in which the specific notification item is arranged at a specific position or a random position according to the property of the notification information.

6. The method as claimed in claim 1, wherein the displaying of the notification information comprises at least one of:
displaying a notification screen comprising at least one notification item, wherein the at least one notification item is displayed as a background screen;
displaying a reduced screen of an application generating the notification information as a notification item according to the property of the notification information; and
adjusting and displaying at least one of a size, a position, and a removal of the notification item according to a number of the notification items to be displayed.

7. The method as claimed in claim 1, wherein the receiving of the specific input event comprises at least one of:
receiving a predetermined touch event in a status bar region or a region adjacent to the status bar region; and
receiving a selection of a desired image which is provided for a request for displaying the notification item.

8. An electronic device configured to support an operation of a notification function, the electronic device comprising:
a storage unit configured to store notification information generated according to an operation of the electronic device;
a controller configured to generate a notification item corresponding to the notification information by applying a specific display type among a plurality of display types; and
a display unit configured to display the notification item on a notification screen.

9. The electronic device as claimed in claim 11, wherein the storage unit is configured to store the notification item generated according to an occurrence of the notification information.

10. The electronic device as claimed in claim 11, wherein the controller is configured to control the generation of the notification item based on the stored notification information, so as to constitute the notification screen, after a display of the notification screen is requested.

11. The electronic device as claimed in claim 11, wherein the controller is configured to differently apply a display type of the notification item according to at least one of an amount of the notification information, a sort of an application providing the notification information, a priority or importance of the notification item, a time when the notification information is generated, a position where the notification information is generated, a number of the notification items, a size of a notification screen on which the notification item is displayed, and a content type of notification information included in the notification item.

12. The electronic device as claimed in claim 11, wherein the display unit is configured to display on the notification screen at least one of:
a grid type notification item in which a plurality of items are arranged in longitudinal and transverse directions according to a property of the notification information;
a list type notification item in which only one item is arranged in a longitudinal or transverse direction and a plurality of items is arranged in a transverse or longitudinal direction according to a property of the notification information; and
a free arrangement type notification item which is arranged at a specific position or a random position according to the property of the notification information, regardless of longitudinal and transverse directions.

13. The electronic device as claimed in claim 11, wherein the display unit is configured to display at least one of: at least one notification item displayed as a background screen of the notification screen and a notification item corresponding to a reduced screen of an application corresponding to the notification information.

14. The electronic device as claimed in claim 11, wherein the controller is configured to adjust at least one of a size and a position of the notification items according to a change of a number of the notification items displayed on the notification screen.

15. The electronic device as claimed in claim 11, wherein the display unit is configured to display at least one notification item in a pop-up form in which a plurality of the notification items are arranged in longitudinal and transverse directions, or is configured to display a reduced screen of the notification screen by overlaying the reduced screen on a current screen.
